# EUROPEAN PATENT APPLICATION

(11) **EP 4 130 960 A1**
(43) Date of publication of application: **08.02.2023**
(21) Application number: 21797219.9
(22) Date of filing: 30.03.2021
(51) Int. Cl.: G06F 3/0484

(54) **UI CONTROL GENERATION AND TRIGGER METHODS, AND TERMINAL**

(30) Priority: 30.04.2020 CN 202010367228
(71) Applicant: Huawei Technologies Co., Ltd., Shenzhen, Guangdong 518129 (CN)
(72) Inventor: HOU, Xuanzhe, Shenzhen, Guangdong 518129 (CN); HAN, Ruofei, Shenzhen, Guangdong 518129 (CN)
(74) Representative: Epping - Hermann - Fischer
(86) International application number: PCT/CN2021/083952
(87) International publication number: WO 2021/218535

(57) **Abstract**

Embodiments of this application provide UI control generation and trigger methods, and a terminal. In the technical solution provided in embodiments of this application, it is detected that a UI control template is dragged to a layout file editor by using a drag operation and the drag operation is released. After an editing operation input by a developer to a control editor of the UI control template is received, an attribute of the UI control is set, and the UI control is generated based on the attribute of the UI control. The attribute of the UI control includes a trigger attribute, a presentation attribute, and a response attribute. The trigger attribute includes a plurality of input events supported by the UI control. The presentation attribute includes a plurality of presentation manners supported by the UI control. The response attribute includes a plurality of response actions performed after the UI control is triggered. In embodiments of this application, the developer can conveniently develop a GUI application that supports a plurality of input events and a plurality of presentation manners.

## Description

This application claims priority to Chinese Patent Application No. 202010367228.X, filed with the China National Intellectual Property Administration on April 30, 2020 and entitled "UI CONTROL GENERATION AND TRIGGER METHODS, AND TERMINAL", which is incorporated herein by reference in its entirety.

### TECHNICAL FIELD

This application relates to the field of computer technologies, and in particular, to UI control generation and trigger methods, and a terminal.

### BACKGROUND

Currently, a mainstream application in the industry is an application based on a graphic user interface (Graphic User Interface, GUI), and an interface of the GUI application includes several user interface (User Interface, UI) controls. When developing the GUI application, a developer first places the UI controls, and then writes code for the UI controls. After the GUI application is developed, in a process in which a user uses the GUI application, when the user clicks a UI control, the GUI application automatically executes code corresponding to the UI control. In an aspect, the UI control is used to implement a display function of the GUI application. For example, the UI control is used to display a confirmation button. In another aspect, the UI control is used as a target of user input, for example, the confirmation button is used to receive a click operation of the user.

In the GUI application, the user may generally trigger the UI control only by using a mouse or a touchscreen. Therefore, the UI control supports a single type of input event, and does not support a plurality of input events such as a voice or a gesture. In addition, a presentation manner of the UI control before, during, and after triggering includes only a graphic. For example, when the user presses a left mouse button to click the confirmation button, a presentation manner of the confirmation button is a graphic of a button in a pressing state. When the user releases the left mouse button, the presentation manner of the confirmation button is a graphic of a button in a non-pressing state. Therefore, the UI control supports a single type of presentation manner, and does not support a plurality of presentation manners such as lighting or sound.

To enable the UI control to support a plurality of input events and a plurality of presentation manners, the developer writes code to integrate a software development kit (Software Development Kit, SDK) SDK, and extends the GUI application by using an application programming interface (Application Programming Interface, API) provided by the SDK, so that the UI control supports a plurality of input events and a plurality of presentation manners. However, when developing the GUI application in a current application framework, the developer is constrained by a great develop technology difficulty and high costs, and cannot conveniently develop a GUI application that supports a plurality of input events and a plurality of presentation manners.

### SUMMARY

In view of this, embodiments of this application provide UI control generation and trigger methods and a terminal, so that a developer can conveniently develop a GUI application that supports a plurality of input events and a plurality of presentation manners.

According to a first aspect, an embodiment of this application provides a UI control generation method, applied to a first terminal, where the first terminal includes an IDE and a UI framework, the IDE includes a layout file editor and a control editor, the UI framework includes a UI control template, and the method includes:
detecting that the UI control template is dragged to the layout file editor by using a drag operation and the drag operation is released; and
setting an attribute of a UI control and generating the UI control based on the attribute of the UI control after receiving an editing operation input by a developer to the control editor of the UI control template, where
the attribute of the UI control includes a trigger attribute, a presentation attribute, and a response attribute, the trigger attribute includes a plurality of input events supported by the UI control, the presentation attribute includes a plurality of presentation manners supported by the UI control, and the response attribute includes a plurality of response actions performed after the UI control is triggered.

In the technical solutions of the UI control generation method provided in this embodiment of this application, after receiving the editing operation input by the developer to the control editor of the UI control template, the first terminal sets the attribute of the UI control, and generates the UI control based on the attribute of the UI control. The attribute of the UI control includes the trigger attribute, the presentation attribute, and the response attribute. The trigger attribute includes the plurality of input events supported by the UI control. The presentation attribute includes the plurality of presentation manners supported by the UI control. The response attribute includes the plurality of response actions performed after the UI control is triggered. In this embodiment of this application, the developer can develop, without using an SDK, a GUI application that supports a plurality of input events and a plurality of presentation manners. Therefore, the developer does not need to recognize occasions for starting and stopping detection of an input event that matches the UI control, and the developer does not need to additionally write code used to start and stop detection of the input event that matches the UI control, and adaptation code that is in the terminal and that adapts to an API in the SDK. This reduces workload of developing the GUI application by the developer, and reduces a technical difficulty of the developer. The developer does not need to understand a meaning and a constraint of the API, and does not need to understand technical concepts of various input manners. This reduces a technical barrier. In a possible implementation, the control editor includes a trigger attribute editing unit, a presentation attribute editing unit, and a response attribute editing unit; and

the setting an attribute of a UI control and generating the UI control based on the attribute of the UI control after receiving an editing operation input by a developer to the control editor of the UI control template includes:
after receiving an editing operation input by the developer to the presentation attribute editing unit, setting the presentation attribute of the UI control;
after receiving an editing operation input by the developer to the trigger attribute editing unit, setting the trigger attribute of the UI control;
after receiving an editing operation input by the developer to the response attribute editing unit, setting the response attribute of the UI control; and
generating the UI control based on the presentation attribute, the trigger attribute, and the response attribute of the UI control.

In the technical solutions of the UI control generation method provided in this embodiment of this application, the developer only needs to simply set the presentation attribute, the trigger attribute, and the response attribute of the UI control in the control editor, so that the first terminal can generate the UI control based on the presentation attribute, the trigger attribute, and the response attribute that are of the UI control and that are set by the developer.

In a possible implementation, the UI control includes at least one of a slider bar control, a selection control, a button control, a list control, and an input control.

In a possible implementation, the input event includes at least one of a voice event, an image event, a touch event, a mouse event, a keyboard event, a sensor event, and a remote input device event.

In the technical solutions of the UI control generation method provided in this embodiment of this application, after the GUI application is developed, a UI control of the GUI application can be triggered by using a new input event, and the GUI application does not need to perform update or adaptation.

In a possible implementation, the presentation manner includes at least one of a word, a graphic, sound, a video, and lighting.

In the technical solutions of the UI control generation method provided in this embodiment of this application, a UI control of the GUI application supports a plurality of presentation manners.

According to another aspect, an embodiment of this application provides a UI control trigger method, applied to a second terminal, where the second terminal includes a target application, a UI framework, and a system service, and the method includes:
invoking, when detecting a start operation performed by a user on the target application, the UI framework to load a first interface of the target application, where the first interface includes a UI control, and determining an input event corresponding to a trigger attribute of the UI control;
invoking the system service to obtain an input event input by using an input device and recognize the input event input by using the input device, and generating, when recognizing that the input event input by using the input device matches the input event corresponding to the trigger attribute, a trigger request corresponding to the input event; and
finding, based on the input event carried in the trigger request, a UI control corresponding to the input event, and triggering the UI control, where
an attribute of the UI control includes a trigger attribute, a presentation attribute, and a response attribute, the trigger attribute includes a plurality of input events supported by the UI control, the presentation attribute includes a plurality of presentation manners supported by the UI control, and the response attribute includes a plurality of response actions performed after the UI control is triggered.

In the technical solutions of the UI control trigger method provided in this embodiment of this application, the attribute of the UI control includes the trigger attribute, the presentation attribute, and the response attribute. The trigger attribute includes the plurality of input events supported by the UI control. The presentation attribute includes the plurality of presentation manners supported by the UI control. The response attribute includes the plurality of response actions performed after the UI control is triggered. Therefore, a UI control of the target application in this embodiment of this application supports a plurality of input events and a plurality of presentation manners.

In a possible implementation, after the determining an input event corresponding to a trigger attribute of the UI control, and before the invoking the system service to obtain an input event input by using an input device and recognize the input event input by using the input device, the method further includes:
storing the input event corresponding to the trigger attribute of the UI control; and
after the generating, when recognizing that the input event input by using the input device matches the input event corresponding to the trigger attribute, a trigger request corresponding to the input event, the method further includes:
   verifying the input event carried in the trigger request; when the verification succeeds, finding, based on the input event carried in the trigger request, the UI control corresponding to the input event; and triggering the UI control.

In the technical solutions of the UI control trigger method provided in this embodiment of this application, the input event corresponding to the trigger attribute of the UI control is stored to subsequently verify the input event carried in the trigger request. When the verification succeeds, the UI control corresponding to the input event is found based on the input event carried in the trigger request, and the UI control is triggered. In this embodiment of this application, the input event carried in the trigger request is verified, to prevent the second terminal from mistakenly triggering the UI control.

In a possible implementation, the verifying the input event carried in the trigger request includes:
comparing the input event carried in the trigger request with the stored input event corresponding to the trigger attribute of the UI control, where
that the verification succeeds means that the input event carried in the trigger request and the stored input event corresponding to the trigger attribute of the UI control are a same input event.

In a possible implementation, the finding, based on the input event carried in the trigger request, a UI control corresponding to the input event, and triggering the UI control specifically includes:
finding, based on the input event carried in the trigger request and a preset correspondence between an input event and a control identifier of a UI control, a control identifier corresponding to the input event; finding, based on the control identifier, a UI control corresponding to the control identifier; and triggering the UI control.

In the technical solutions of the UI control trigger method provided in this embodiment of this application, the control identifier of the UI control and the correspondence between an input event and a control identifier of a UI control are preset, so that the second terminal can conveniently find, based on the input event carried in the trigger request, the UI control corresponding to the input event, to trigger the UI control.

In a possible implementation, the invoking, when detecting a start operation performed by a user on the target application, the UI framework to load a first interface of the target application, where the first interface includes a UI control, and determining an input event corresponding to a trigger attribute of the UI control specifically includes:
when detecting the start operation performed by the user on the target application, invoking the UI framework to load a page layout file of the first interface, the UI control in the first interface, the trigger attribute of the UI control, a presentation attribute of the UI control, and a response attribute of the UI control; and
determining the input event corresponding to the trigger attribute of the UI control.

In the technical solutions of the UI control trigger method provided in this embodiment of this application, the second terminal determines the input event corresponding to the trigger attribute of the UI control in the first interface, to determine an input event currently supported by the second terminal. A developer does not need to recognize occasions for starting and stopping detection of an input event that matches the UI control. The second terminal can automatically recognize, based on the input event corresponding to the trigger attribute of the UI control, the occasions for starting and stopping detection of the input event that matches the UI control.

In a possible implementation, after the finding, based on the trigger request, a UI control corresponding to the input event, and triggering the UI control, the method further includes:
when detecting a service operation performed by the user on the target application, invoking the UI framework to load a second interface of the target application, where the second interface includes the UI control; determining an input event corresponding to a trigger attribute of the UI control; and continuing to perform the step of invoking the system service to obtain an input event input by using an input device and recognize the input event input by using the input device.

In a possible implementation, the UI control includes at least one of a slider bar control, a selection control, a button control, a list control, and an input control.

In a possible implementation, the input event includes at least one of a voice event, an image event, a touch event, a mouse event, a keyboard event, a sensor event, and a remote input device event.

The UI control of the target application in this embodiment of this application supports a plurality of input events.

In a possible implementation, the presentation manner includes at least one of a word, a graphic, sound, a video, and lighting.

The UI control of the target application in this embodiment of this application supports a plurality of presentation manners.

In a possible implementation, a recognition function of the system service includes a recognition function such as voice recognition, body recognition, intent recognition, sentiment recognition, system environment monitoring, and conventional input recognition. According to another aspect, an embodiment of this application provides a first terminal, including a display, a processor, and a memory, where the first terminal further includes an IDE and a UI framework, the IDE includes a layout file editor and a control editor, the UI framework includes a UI control template, the memory is configured to store a computer program, the computer program includes program instructions, and when the processor runs the program instructions, the first terminal is enabled to perform the following steps:
detecting that the UI control template is dragged to the layout file editor by using a drag operation and the drag operation is released; and
setting an attribute of a UI control and generating the UI control based on the attribute of the UI control after receiving an editing operation input by a developer to the control editor of the UI control template, where
the attribute of the UI control includes a trigger attribute, a presentation attribute, and a response attribute, the trigger attribute includes a plurality of input events supported by the UI control, the presentation attribute includes a plurality of presentation manners supported by the UI control, and the response attribute includes a plurality of response actions performed after the UI control is triggered.

In the technical solutions of the first terminal provided in this embodiment of this application, after receiving the editing operation input by the developer to the control editor of the UI control template, the first terminal sets the attribute of the UI control, and generates the UI control based on the attribute of the UI control. The attribute of the UI control includes the trigger attribute, the presentation attribute, and the response attribute. The trigger attribute includes the plurality of input events supported by the UI control. The presentation attribute includes the plurality of presentation manners supported by the UI control. The response attribute includes the plurality of response actions performed after the UI control is triggered. In this embodiment of this application, the developer can develop, without using an SDK, a GUI application that supports a plurality of input events and a plurality of presentation manners. Therefore, the developer does not need to recognize occasions for starting and stopping detection of an input event that matches the UI control, and the developer does not need to additionally write code used to start and stop detection of the input event that matches the UI control, and adaptation code that is in the terminal and that adapts to an API in the SDK. This reduces workload of developing the GUI application by the developer, and reduces a technical difficulty of the developer. The developer does not need to understand a meaning and a constraint of the API, and does not need to understand technical concepts of various input manners. This reduces a technical barrier.

In a possible implementation, the control editor includes a trigger attribute editing unit, a presentation attribute editing unit, and a response attribute editing unit; and when the processor runs the program instructions, the first terminal is enabled to perform the following steps:
the setting an attribute of a UI control and generating the UI control based on the attribute of the UI control after receiving an editing operation input by a developer to the control editor of the UI control template includes:
after receiving an editing operation input by the developer to the presentation attribute editing unit, setting the presentation attribute of the UI control;
after receiving an editing operation input by the developer to the trigger attribute editing unit, setting the trigger attribute of the UI control;
after receiving an editing operation input by the developer to the response attribute editing unit, setting the response attribute of the UI control; and
generating the UI control based on the presentation attribute, the trigger attribute, and the response attribute of the UI control.

In the technical solutions of the first terminal provided in this embodiment of this application, the developer only needs to simply set the presentation attribute, the trigger attribute, and the response attribute of the UI control in the control editor, so that the first terminal can generate the UI control based on the presentation attribute, the trigger attribute, and the response attribute that are of the UI control and that are set by the developer.

In a possible implementation, the UI control includes at least one of a slider bar control, a selection control, a button control, a list control, and an input control.

In a possible implementation, the input event includes at least one of a voice event, an image event, a touch event, a mouse event, a keyboard event, a sensor event, and a remote input device event.

In the technical solutions of the first terminal provided in this embodiment of this application, after the GUI application is developed, a UI control of the GUI application can be triggered by using a new input event, and the GUI application does not need to perform update or adaptation.

In a possible implementation, the presentation manner includes at least one of a word, a graphic, sound, a video, and lighting.

In the technical solutions of the first terminal provided in this embodiment of this application, a UI control of the GUI application supports a plurality of presentation manners.

According to another aspect, an embodiment of this application provides a second terminal, including a display, a processor, and a memory, where the second terminal further includes a target application, a UI framework, and a system service, the memory is configured to store a computer program, the computer program includes program instructions, and when the processor runs the program instructions, the second terminal is enabled to perform the following steps:
invoking, when detecting a start operation performed by a user on the target application, the UI framework to load a first interface of the target application, where the first interface includes a UI control, and determining an input event corresponding to a trigger attribute of the UI control;
invoking the system service to obtain an input event input by using an input device and recognize the input event input by using the input device, and generating, when recognizing that the input event input by using the input device matches the input event corresponding to the trigger attribute, a trigger request corresponding to the input event; and
finding, based on the input event carried in the trigger request, a UI control corresponding to the input event, and triggering the UI control, where
an attribute of the UI control includes a trigger attribute, a presentation attribute, and a response attribute, the trigger attribute includes a plurality of input events supported by the UI control, the presentation attribute includes a plurality of presentation manners supported by the UI control, and the response attribute includes a plurality of response actions performed after the UI control is triggered.

In the technical solutions of the second terminal provided in this embodiment of this application, the attribute of the UI control includes the trigger attribute, the presentation attribute, and the response attribute. The trigger attribute includes the plurality of input events supported by the UI control. The presentation attribute includes the plurality of presentation manners supported by the UI control. The response attribute includes the plurality of response actions performed after the UI control is triggered. Therefore, a UI control of the target application in this embodiment of this application supports a plurality of input events and a plurality of presentation manners.

In a possible implementation, when the processor runs the program instructions, the second terminal is enabled to perform the following steps:
after the determining an input event corresponding to a trigger attribute of the UI control, and before the invoking the system service to obtain an input event input by using an input device and recognize the input event input by using the input device, the method further includes:
storing the input event corresponding to the trigger attribute of the UI control; and
after the generating, when recognizing that the input event input by using the input device matches the input event corresponding to the trigger attribute, a trigger request corresponding to the input event, the method further includes:
   verifying the input event carried in the trigger request; when the verification succeeds, finding, based on the input event carried in the trigger request, the UI control corresponding to the input event; and triggering the UI control.

In the technical solutions of the second terminal provided in this embodiment of this application, the input event corresponding to the trigger attribute of the UI control is stored to subsequently verify the input event carried in the trigger request. When the verification succeeds, the UI control corresponding to the input event is found based on the input event carried in the trigger request, and the UI control is triggered. In this embodiment of this application, the input event carried in the trigger request is verified, to prevent the second terminal from mistakenly triggering the UI control.

In a possible implementation, when the processor runs the program instructions, the second terminal is enabled to perform the following steps:
the verifying the input event carried in the trigger request includes:
comparing the input event carried in the trigger request with the stored input event corresponding to the trigger attribute of the UI control, where
that the verification succeeds means that the input event carried in the trigger request and the stored input event corresponding to the trigger attribute of the UI control are a same input event.

In a possible implementation, when the processor runs the program instructions, the second terminal is enabled to perform the following steps:
the finding, based on the input event carried in the trigger request, a UI control corresponding to the input event, and triggering the UI control specifically includes:
finding, based on the input event carried in the trigger request and a preset correspondence between an input event and a control identifier of a UI control, a control identifier corresponding to the input event; finding, based on the control identifier, a UI control corresponding to the control identifier; and triggering the UI control.

In the technical solutions of the second terminal provided in this embodiment of this application, the control identifier of the UI control and the correspondence between an input event and a control identifier of a UI control are preset, so that the second terminal can conveniently find, based on the input event carried in the trigger request, the UI control corresponding to the input event, to trigger the UI control.

In a possible implementation, when the processor runs the program instructions, the second terminal is enabled to perform the following steps:
the invoking, when detecting a start operation performed by a user on the target application, the UI framework to load a first interface of the target application, where the first interface includes a UI control, and determining an input event corresponding to a trigger attribute of the UI control specifically includes:
when detecting the start operation performed by the user on the target application, invoking the UI framework to load a page layout file of the first interface, the UI control in the first interface, the trigger attribute of the UI control, a presentation attribute of the UI control, and a response attribute of the UI control; and
determining the input event corresponding to the trigger attribute of the UI control.

In the technical solutions of the second terminal provided in this embodiment of this application, the second terminal determines the input event corresponding to the trigger attribute of the UI control in the first interface, to determine an input event currently supported by the second terminal. A developer does not need to recognize occasions for starting and stopping detection of an input event that matches the UI control. The second terminal can automatically recognize, based on the input event corresponding to the trigger attribute of the UI control, the occasions for starting and stopping detection of the input event that matches the UI control.

In a possible implementation, when the processor runs the program instructions, the second terminal is enabled to perform the following steps:
after the finding, based on the trigger request, a UI control corresponding to the input event, and triggering the UI control, the method further includes:
when detecting a service operation performed by the user on the target application, invoking the UI framework to load a second interface of the target application, where the second interface includes a UI control; determining an input event corresponding to a trigger attribute of the UI control; and continuing to perform the step of invoking the system service to obtain an input event input by using an input device and recognize the input event input by using the input device.

In a possible implementation, the UI control includes at least one of a slider bar control, a selection control, a button control, a list control, and an input control.

In a possible implementation, the input event includes at least one of a voice event, an image event, a touch event, a mouse event, a keyboard event, a sensor event, and a remote input device event.

The UI control of the target application in this embodiment of this application supports a plurality of input events.

In a possible implementation, the presentation manner includes at least one of a word, a graphic, sound, a video, and lighting.

The UI control of the target application in this embodiment of this application supports a plurality of presentation manners.

In a possible implementation, a recognition function of the system service includes a recognition function such as voice recognition, body recognition, intent recognition, sentiment recognition, system environment monitoring, and conventional input recognition.

In the technical solutions of the UI control generation and trigger methods and the terminal that are provided in embodiments of this application, it is detected that the UI control template is dragged to the layout file editor by using the drag operation and the drag operation is released. After the editing operation input by the developer to the control editor of the UI control template is received, the attribute of the UI control is set, and the UI control is generated based on the attribute of the UI control. The attribute of the UI control includes the trigger attribute, the presentation attribute, and the response attribute. The trigger attribute includes the plurality of input events supported by the UI control. The presentation attribute includes the plurality of presentation manners supported by the UI control. The response attribute includes the plurality of response actions performed after the UI control is triggered. In embodiments of this application, the developer can conveniently develop a GUI application that supports a plurality of input events and a plurality of presentation manners.

### BRIEF DESCRIPTION OF DRAWINGS

FIG. 1 is a schematic diagram of a development interface of a GUI application;
FIG. 2 is another schematic diagram of a development interface of a GUI application;
FIG. 3 is a schematic diagram of a development interface of a GUI application according to an embodiment of this application;
FIG. 4A and FIG. 4B are a schematic diagram of a structure of a system architecture according to an embodiment of this application;
FIG. 5 is a flowchart of a UI control generation method according to an embodiment of this application;
FIG. 6 is a specific flowchart of step 104 in FIG. 5;
FIG. 7 is another schematic diagram of the development interface in FIG. 3;
FIG. 8 is still another schematic diagram of the development interface in FIG. 3;
FIG. 9 is a flowchart of a UI control trigger method according to an embodiment of this application;
FIG. 10 is a schematic diagram of a login interface of an app 1;
FIG. 11 is a specific flowchart of step 202 in FIG. 8;
FIG. 12 is a flowchart of loading a first interface by a second terminal;
FIG. 13 is a schematic diagram of a structure of a first terminal according to an embodiment of this application;
FIG. 14 is a schematic diagram of a structure of a second terminal according to an embodiment of this application; and
FIG. 15 is a schematic diagram of a structure of an electronic device according to an embodiment of this application.

### DESCRIPTION OF EMBODIMENTS

For a better understanding of the technical solutions in this application, the following describes embodiments of this application in detail with reference to the accompanying drawings.

It should be clear that the described embodiments are merely some but not all embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term " and/or" used in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

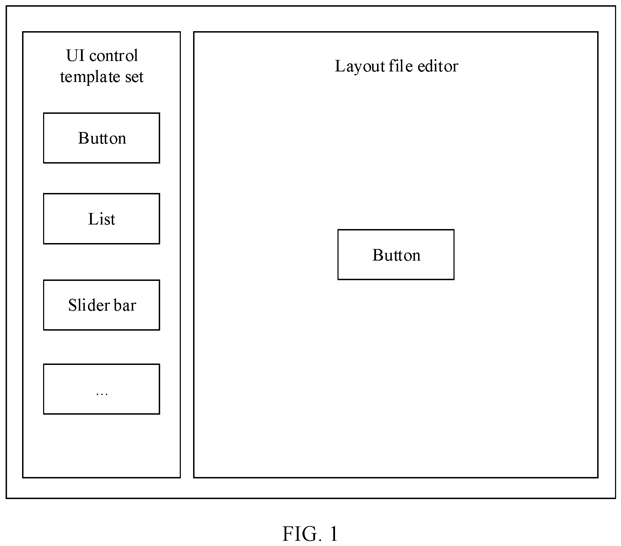

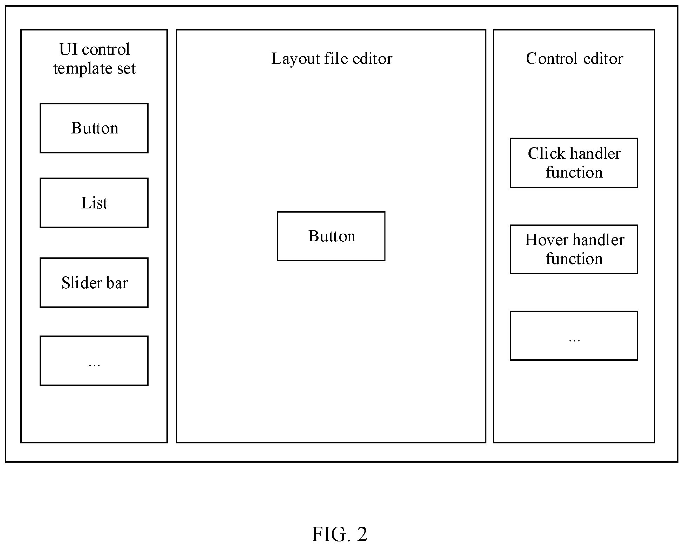

FIG. 1 is a schematic diagram of a development interface of a GUI application. FIG. 2 is another schematic diagram of a development interface of a GUI application.

After a developer starts development software used to develop a GUI application, a development interface of the development software is opened. As shown in FIG. 1, the development interface includes a UI control template set and a layout file editor. The UI control template set includes UI control templates such as a button control template, a list control template, and a slider bar control template. The developer selects a required UI control template such as the button control template, and drags the selected UI control template to any location in the layout file editor. Then, the developer may double-click or right-click, with a mouse, the UI control template, so that a control editor shown in FIG. 2 pops up in the development interface. The control editor includes handler functions such as a click handler function and a hover handler function. The click handler function is used to edit code corresponding to an operation performed by the GUI application when a user performs a click operation on a button control. The hover handler function is used to edit code corresponding to an operation performed by the GUI application when the user performs a hover operation on the button control. The hover operation includes that the user moves the mouse to make a cursor hover over the button control. The developer selects the handler function based on a requirement, to write corresponding code. Specifically, the developer double-clicks the handler function in the control editor, for example, the click handler function, so that a code writing interface used to write code corresponding to the selected handler function pops up in the development interface, or a code writing interface used to write code corresponding to the selected handler function pops up outside the development interface. The developer writes, in the code interface, the code corresponding to the selected handler function. The code corresponding to the handler function includes service logic code of a UI control and output code corresponding to a presentation manner of the UI control. The service logic code includes code corresponding to a service operation performed by a terminal when the UI control is triggered. For example, service logic code associated with a button control "login" in an app "Huawei music" may include code for logging in to a Huawei music server. Therefore, when the button control "login" in the app "Huawei music" is triggered, a service operation performed by the terminal includes logging in to the Huawei music server.

For the GUI application developed by the developer by using the foregoing operation, the developer writes only code corresponding to a handler function of a UI control of the GUI application, and the handler function includes only conventional handler functions such as the click handler function and the hover handler function. As a result, when the user uses the GUI application, in an aspect, the UI control of the GUI application can be triggered only by a conventional input event input by the user by using a mouse, a touchscreen, or a keyboard, and cannot be triggered by a modern input event input by the user by using another input device, for example, a voice, a body, a sentiment, a lip language, a sign language, or an electromyographic signal. In addition, one UI control cannot be triggered by a plurality of input events. In another aspect, a presentation manner of the UI control of the GUI application includes only a graphic before, during, and after triggering. Therefore, the UI control of the GUI application developed by using the foregoing method supports a single type of input event and a single type of presentation manner, and does not support a plurality of input events and a plurality of presentation manners.

In a process in which the user uses the GUI application developed by using the foregoing method, when the terminal receives a start operation performed by the user on the GUI application, the terminal starts the GUI application, and invokes a UI framework to load a page layout file and a UI control of an interface of the GUI application, so as to open the interface of the GUI application. For example, the interface of the GUI application is displayed on a screen of the terminal. When the user clicks a location for displaying a button control on the screen, an input service of the terminal receives the click event, and sends the click event to the UI framework. The UI framework finds the button control based on coordinate information of the click event, and executes code corresponding to a handler function of the button control.

To resolve the technical problem, in the foregoing method, that the UI control of the GUI application supports a single type of input event and a single type of presentation manner, and does not support a plurality of input events and a plurality of presentation manners, the developer may use an SDK, and the SDK can provide a capability of recognizing a voice and a gesture. The developer writes code to integrate the SDK, and extends the GUI application by using an API provided by the SDK, so that the UI control of the GUI application supports a plurality of input events and a plurality of presentation manners.

A difference from the foregoing method is as follows: Because the SDK is used, in addition to the service logic code of the UI control and the output code corresponding to the presentation manner of the UI control, the developer further needs to write, in the code writing interface, adaptation code that is in the terminal and that adapts to the API in the SDK, and invoking code for starting and stopping detection, by the API in the SDK, of an input event that matches the UI control. For example, when the UI control is visible, detection, by the API in the SDK, of the input event that matches the UI control is started. When the UI control is invisible, detection, by the API in the SDK, of the input event that matches the UI control is stopped.

In a process in which the user uses the GUI application developed by using the foregoing method in which the SDK is used, in a possible implementation, when the terminal receives a start operation performed by the user on the GUI application, the terminal starts the GUI application, and invokes a UI framework to load a page layout file and a UI control of an interface of the GUI application, so as to open the interface of the GUI application. For example, the interface of the GUI application is displayed on a screen of the terminal as a login interface, and the login interface includes a button control "login". In this case, the terminal may detect that the terminal is in a non-power saving mode and the terminal enables voice permission for the GUI application. Therefore, the SDK of the terminal may invoke invoking code for starting detection of a voice "login" by the API in the SDK, so as to start detection of the voice "login". When the API in the SDK detects that the user says "login", the SDK finds the corresponding button control "login" by invoking the code written by the developer. Then, the SDK invokes input code corresponding to a presentation manner of the button control "login", to simulate an effect of clicking the button control "login". Finally, the SDK invokes the service logic code of the button control "login" to execute a login service. In addition, when a trigger attribute of a UI control in the interface, of the GUI application, displayed on the screen of the terminal does not include a voice event, or the terminal is in a power saving mode, or the terminal disables voice permission for the GUI application, the SDK of the terminal may not invoke the invoking code for starting detection of a voice event by the API in the SDK, so as to start detection of the voice event.

In the foregoing method in which the SDK is used, although the UI control of the GUI application may support a plurality of input events and a plurality of presentation manners, the following technical problems exist:
The developer needs to write, for all UI controls of the GUI application, code used to start and stop detection of the input event that matches with the UI control, and adaptation code that is in the terminal and that adapts to the API in the SDK, causing huge workload. The developer needs to recognize occasions for starting and stopping detection of the input event that matches the UI control, causing a very high technical difficulty. The SDK is used in a form of code, and the developer needs to understand a meaning and a constraint of the API, and understand technical concepts of various input manners, causing a high technical barrier. After the GUI application is developed, the UI control of the GUI application cannot be triggered by using a new input event. For example, the developer integrates a voice API, so that the UI control supports a voice input event. Even if the SDK subsequently provides a lip-language input event and a sign-language input event, the lip-language input event and the sign-language input event cannot trigger the UI control of the GUI application. The UI control of the GUI application supports a single type of presentation manner, and does not support a presentation manner such as a voice, vibration, and lighting.

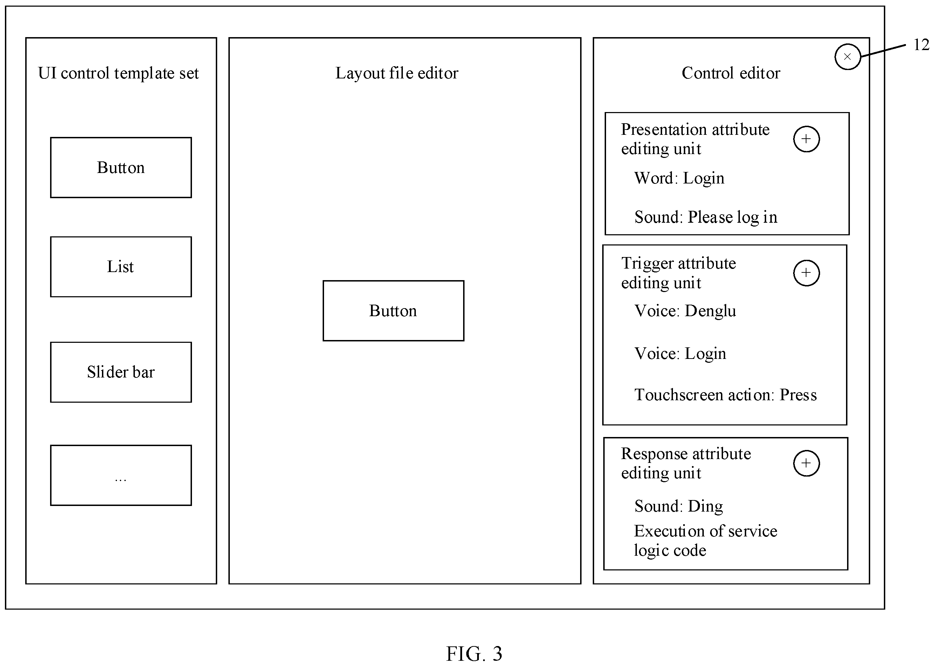

FIG. 3 is a schematic diagram of a development interface of a GUI application according to an embodiment of this application. A difference between a GUI application developed by using an IDE and a UI frame that are provided in this embodiment of this application and those in the foregoing two methods is as follows: A developer double-clicks or right-clicks, with a mouse, a UI control template dragged to a layout file editor, so that a control editor pops up in a development interface, and the control editor that pops up is shown in FIG. 3. The control editor includes a presentation attribute editing unit, a trigger attribute editing unit, and a response attribute editing unit. For example, the UI control template dragged to the layout file editor includes a button control template, and the developer edits the button control template by using the control editor to generate a button control that can execute a function "login". Specifically, as shown in FIG. 3, a presentation manner that is of a button control "login" and that is set by the developer in the presentation attribute editing unit includes a word "login" and sound "please log in", so that when opening a login interface of the GUI application, a user can view a graphic that is of the button control and on which the word "login" is displayed, and can hear a sound prompt "please log in". An input event that is of the button control "login" and that is set by the developer in the trigger attribute editing unit includes a voice "login", a voice "login", and a touchscreen action "press", so that the button control "login" can be triggered when the user inputs the voice "login" or "login" in the login interface of the GUI application by using a microphone, or the button control "login" can be triggered when the user presses, on a touchscreen by using a finger, a graphic that is of the button control and on which the word "login" is displayed. A response action that is set by the developer in the response attribute editing unit and that is performed after the button control "login" is triggered includes sound "ding" and execution of service logic code, so that after the button control "login" is triggered, the GUI application executes the service logic code of the button control "login" to enable the user to hear the sound "ding".

In conclusion, a reason that the developer can conveniently develop, by using the IDE and UI framework that are provided in this embodiment of this application, a GUI application that supports a plurality of input events and a plurality of presentation manners is as follows: The developer only needs to drag the UI control template to the layout file editor, selects an attribute of a UI control from the control editor of the UI control template for editing, and writes service logic code executed by a terminal when the UI control is triggered. The developer does not need to additionally write output code corresponding to a presentation manner of the UI control, and does not need to write code used to start and stop detection of an input event that matches the UI control, and adaptation code that is in the terminal and that adapts to an API in an SDK. Therefore, in this embodiment of this application, workload of developing the GUI application by the developer is reduced, and a technical difficulty of the developer is reduced, so that the developer can conveniently develop a GUI application that supports a plurality of input events and a plurality of presentation manners.

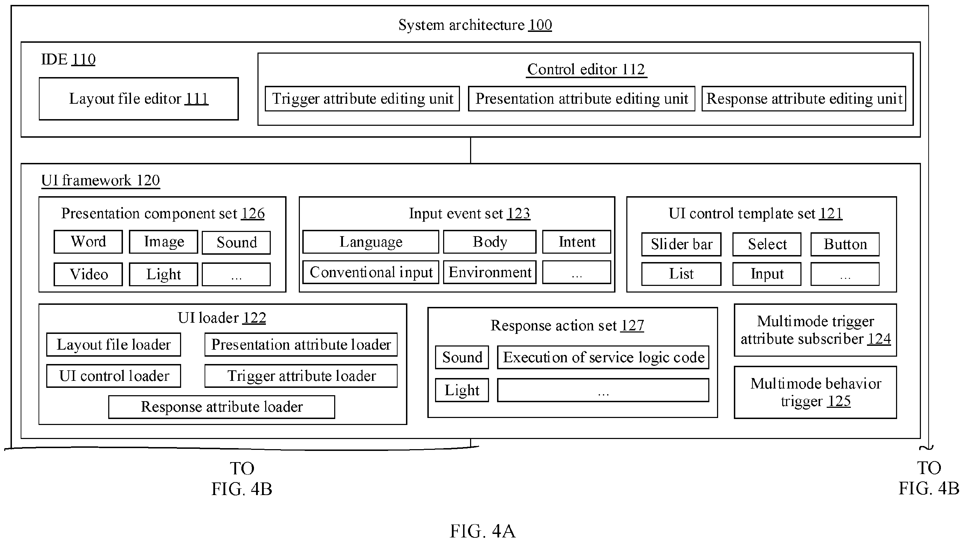

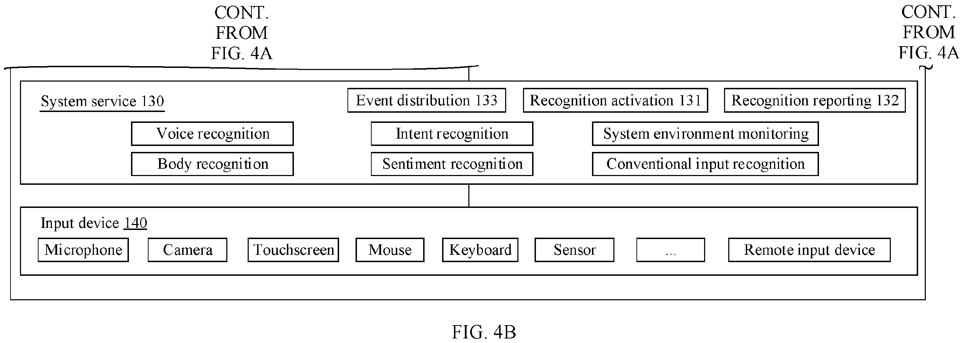

As shown in FIG. 4A and FIG. 4B, an embodiment of this application provides a system architecture 100. In FIG. 4A and FIG. 4B, the system architecture 100 includes an integrated development environment (Integrated Development Environment, IDE) 110, a UI framework 120, a system service 130, and an input device 140. Based on the IDE 110 and the UI framework 120 in the system architecture 100 provided in this embodiment of this application, a developer can conveniently develop a GUI application that supports a plurality of input manners and a plurality of presentation manners. After the GUI application that supports a plurality of input manners and a plurality of presentation manners is developed, a user can use the GUI application based on the UI framework 120, the system service 130, and the input device 140 in the system architecture 100 provided in this embodiment of this application.

The IDE 110 is used to visually edit an interface of a GUI application and a UI control in the interface of the GUI application, and generate a page layout file of the interface of the GUI application. Page layout is used to represent organizing data on a page. The page layout file is a document file that stores the page layout. The page layout file may include text and image data, and format information about how to format the text and image data. The format information may include a page size, a margin, a content organization, object filling, a grid, a template, and the like. In this embodiment of this application, the UI control may include at least one of a slider bar control, a selection control, a button control, a list control, and an input control.

The IDE 110 includes a layout file editor 111 and a control editor 112. The layout file editor 111 is used to visually edit the interface of the GUI application, and generate the page layout file of the interface of the GUI application. The control editor 112 is used to edit an attribute of the UI control. Specifically, the control editor 112 includes a trigger attribute editing unit, a presentation attribute editing unit, and a response attribute editing unit. The trigger attribute editing unit is used to edit a trigger attribute of the UI control. The presentation attribute editing unit is used to edit a presentation attribute of the UI control. The response attribute editing unit is used to edit a response action performed after the UI control is triggered. It should be noted that, the trigger attribute of the UI control includes a plurality of input events supported by the UI control, the presentation attribute of the UI control includes a plurality of presentation manners supported by the UI control, and the response attribute of the UI control includes a plurality of response actions performed after the UI control is triggered.

The UI framework 120 includes a UI control template set 121, a UI loader 122, an input event set 123, a multimode trigger attribute subscriber 124, a multimode behavior trigger 125, a presentation component set 126, and a response action set 127.

Specifically, the UI control template set 121 is used to provide a UI control template for the IDE, so that the IDE creates the UI control based on the UI control template. The UI control template set 121 includes UI control templates such as a slider bar control template, a selection control template, a button control template, a list control template, and an input control template. The UI loader 122 is used to load the page layout file of the interface of the GUI application, the UI control in the interface of the GUI application, and the trigger attribute, the presentation attribute, and the response attribute of the UI control.

The UI loader 122 includes a layout file loader, a UI control loader, a trigger attribute loader, a presentation attribute loader, and a response attribute loader. The layout file loader is used to load the page layout file of the interface of the GUI application. The UI control loader is used to load the UI control in the interface of the GUI application. The trigger attribute loader is used to load the trigger attribute of the UI control. The presentation attribute loader is used to load the presentation attribute of the UI control. The response attribute loader is used to load the response attribute of the UI control.

The input event set 123 is used to provide the trigger attribute of the UI control for the trigger attribute editing unit in the control editor 112 of the IDE 110. For example, the input event set 123 includes an input event such as a voice, an image, and a mouse, and the input event set 123 can provide the trigger attribute of the UI control for the trigger attribute editing unit, for example, a voice event, an image event, and a mouse event.

The presentation component set 126 is used to provide the presentation attribute of the UI control for the presentation attribute editing unit in the control editor 112 of the IDE 110. For example, the presentation component set 126 includes a presentation manner such as a word, a graphic, sound, a video, and lighting, and the presentation component set 126 can provide the presentation attribute of the UI control for the presentation attribute editing unit, for example, the presentation manner such as a word, a graphic, sound, a video, and lighting.

The response action set 127 is used to provide the response attribute of the UI control for the response attribute editing unit in the control editor 112 of the IDE 110. For example, the response action set 127 includes a response action such as sound, lighting, and execution of service logic code, and the response action set 127 can provide the response attribute of the UI control for the response attribute editing unit, for example, the response action such as sound, lighting, and execution of service logic code.

The multimode trigger attribute subscriber 124 is used to: recognize, based on a UI control designed by the developer in the interface of the GUI application, an input event corresponding to a trigger attribute of the UI control, and send, to the system service 130, the recognized input event corresponding to the trigger attribute. The multimode behavior trigger 125 is used to: receive a trigger request that corresponds to an input event and that is reported by the system service 130, and trigger, based on the input event carried in the trigger request, a UI control corresponding to the input event. It should be noted that the developer presets a control identifier of the UI control in the UI framework, and sets a correspondence between a control identifier of a UI control and an input event corresponding to a trigger attribute of a UI control. Therefore, the multimode behavior trigger of the UI framework can find, based on the input event, the UI control corresponding to the input event.

The system service 130 includes recognition activation 131, recognition reporting 132, and event distribution 133. Specifically, the event distribution 133 in the system service 130 receives the input event that corresponds to the trigger attribute and that is sent by the multimode trigger attribute subscriber 124. In an aspect, the event distribution 133 stores the input event that corresponds to the trigger attribute and that is sent by the multimode trigger attribute subscriber 124, to subsequently verify the input event. In another aspect, the event distribution 133 sends, to the recognition activation 131, the input event that corresponds to the trigger attribute and that is sent by the multimode trigger attribute subscriber 124. The recognition activation 131 may turn on, based on the input event that corresponds to the trigger attribute and that is sent by the event distribution 133, an input device that matches with the input event. For example, an input event of a button control "login" includes voice "login", and the multimode trigger attribute subscriber 124 sends the input event such as the voice "login" to the event distribution 133 for storage. Then, the event distribution 133 sends the input event to the recognition activation 131, and the recognition activation 131 turns on a microphone to collect a voice event. The recognition reporting 132 is used to receive and recognize an input event input by using the input device 140. When recognizing that the input event input by using the input device 140 matches the input event sent by the multimode trigger attribute subscriber 124, the recognition reporting 132 sends, to the event distribution 133, a trigger request corresponding to the input event. The event distribution 133 verifies the input event carried in the trigger request. When the event distribution 133 verifies that the input event carried in the trigger request matches the input event that corresponds to the trigger attribute and that is sent by the multimode trigger attribute subscriber 124, the event distribution 133 sends the trigger request to the multimode behavior trigger 125. Otherwise, the event distribution 133 does not send the trigger request to the multimode behavior trigger 125. For example, after the recognition reporting 132 receives a voice event input by using the microphone and recognizes a voice "login", the recognition reporting 132 sends, to the event distribution 133, a trigger request corresponding to the voice "login". The event distribution 133 verifies the voice "login" carried in the trigger request. When the event distribution 133 verifies that the voice "login" carried in the trigger request matches the voice "login" sent by the multimode trigger attribute subscriber 124, the event distribution 133 sends, to the multimode behavior trigger 125, the trigger request corresponding to the voice "login".

It should be noted that the event distribution 133 may be disposed in the UI framework. In this case, only the recognition activation 131 and the recognition reporting 132 need to be disposed in the system service 130. For example, an input event of a button control "login" includes voice "login", and the multimode trigger attribute subscriber 124 sends the input event such as the voice "login" to the event distribution of the UI framework. In an aspect, the event distribution stores the input event such as the voice "login" sent by the multimode trigger attribute subscriber 124. In another aspect, the event distribution sends, to the recognition activation 131, the input event such as the voice "login" sent by the multimode trigger attribute subscriber 124. The recognition activation 131 turns on a microphone based on the input event such as the voice "login" by the event distribution, to collect a voice event. After the recognition reporting 132 receives a voice event input by using the microphone and recognizes a voice "login", the recognition reporting 132 sends, to the event distribution of the UI framework, a trigger request corresponding to the voice "login". The event distribution verifies the voice "login" carried in the trigger request. When the event distribution verifies that the voice "login" carried in the trigger request matches the voice "login" sent by the multimode trigger attribute subscriber 124, the event distribution sends, to the multimode behavior trigger 125, the trigger request corresponding to the voice "login".

A recognition function of the system service 130 is used to recognize the input event input by using the input device 140, and the recognition function of the system service 130 specifically includes voice recognition, body recognition, intention recognition, sentiment recognition, system environment monitoring, and conventional input recognition. The conventional input recognition includes recognition of a mouse event, a keyboard event, and a touchscreen event. The input device 140 is used to collect an input event and send the input event to the system service 130. The input device 140 includes at least one of a microphone, a camera, a touchscreen, a mouse, a keyboard, a sensor, and a remote input device. Therefore, the input event collected by the input device 140 includes at least one of a voice event, an image event, a touch event, a mouse event, a keyboard event, a sensor event, and a remote input device event. For example, the image event may include a body, a sentiment, a lip language, or a sign language. The sensor event may include an electromyographic signal.

For example, if an input event sent by the event distribution 133 to the recognition activation 131 includes a two-dimensional code, the recognition activation 131 turns on the camera to collect an input event. When recognizing that the input event collected by the camera matches the two-dimensional code, the recognition reporting 132 sends, to the event distribution 133, a trigger request corresponding to the two-dimensional code. After verification performed by the event distribution 133 on the two-dimensional code carried in the trigger request succeeds, the event distribution 133 sends the trigger request to the multimode behavior trigger 125.

In the system architecture 100 provided in this embodiment of this application, the multimode trigger attribute subscriber 124 is added to the UI framework, so that the system service 130 recognizes the input event that is sent by the input device 140 and that matches the input event sent by the multimode trigger attribute subscriber 124, and the developer does not need to recognize occasions for starting and stopping detection of an input event that matches the UI control. For example, when detecting a start operation performed by the user on the GUI application, a terminal invokes the UI loader of the UI framework to load the interface of the GUI application. After the multimode trigger attribute subscriber 124 of the UI framework determines input events corresponding to trigger attributes of all UI controls in the interface of the GUI application, the multimode trigger attribute subscriber 124 sends, to the event distribution 133 in the system service 130, the input event corresponding to the trigger attribute. The input event corresponding to the trigger attribute includes a voice "login". In an aspect, the event distribution 133 stores the voice "login" corresponding to the trigger attribute, to subsequently verify an input event. In another aspect, the event distribution 133 sends, to the recognition activation 131, the voice "login" corresponding to the trigger attribute. The recognition activation 131 turns on the microphone based on the input event such as the voice "login" sent by the event distribution 133. The recognition reporting 132 receives a voice event input by using the microphone, and recognizes whether the voice event is "login". When the recognition reporting 132 recognizes a voice "login", the microphone is turned off, and a trigger request of the voice "login" is sent to the event distribution 133. After verification performed by the event distribution 133 on the voice "login" carried in the trigger request succeeds, the event distribution 133 sends the trigger request to the multimode behavior trigger 125. The developer does not need to additionally write code used to start and stop detection of the input event that matches the UI control, and adaptation code that is in the terminal and that adapts to an API in an SDK. This reduces workload of developing the GUI application by the developer, and reduces a technical difficulty of the developer. In this embodiment of this application, the developer can develop, without using the SDK, a GUI application whose UI control supports a plurality of input events and a plurality of presentation manners. Therefore, the developer does not need to understand a meaning and a constraint of the API, and does not need to understand technical concepts of various input manners. This reduces a technical barrier. In this embodiment of this application, after the GUI application is developed, the UI control of the GUI application can be triggered by using a new input event, and the GUI application does not need to perform update or adaptation. In this embodiment of this application, the UI control of the GUI application supports a plurality of presentation manners.

In conclusion, compared with the foregoing related technologies 1 and 2, in the system architecture 100 provided in this embodiment of this application, the developer can conveniently develop a GUI application that supports a plurality of input manners and a plurality of presentation manners.

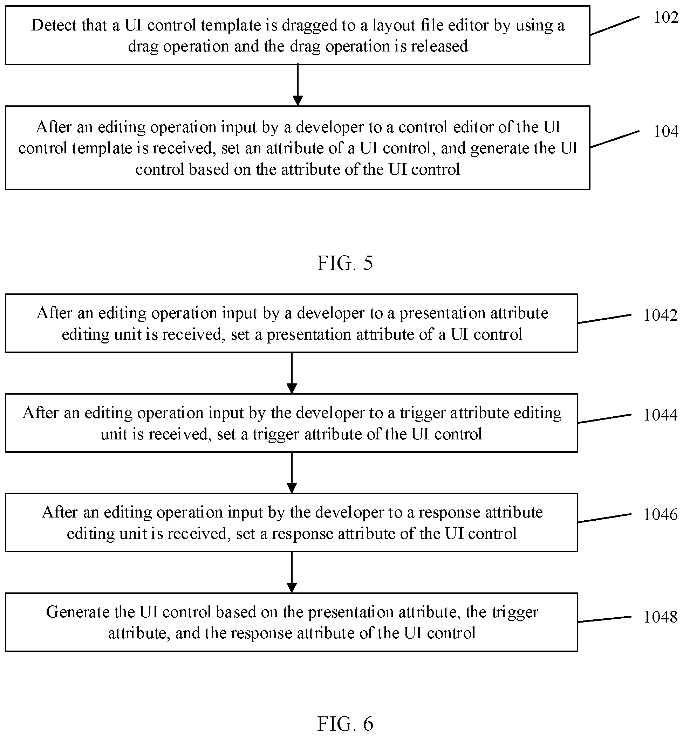

Based on the IDE 100 and the UI framework 120 in the system architecture 100 in FIG. 4A and FIG. 4B, an embodiment of this application provides a UI control generation method. FIG. 5 is a flowchart of a UI control generation method according to an embodiment of this application. The method is applied to a first terminal, the first terminal includes an IDE 100 and a UI framework 120, the IDE 100 includes a layout file editor 111 and a control editor 112, and the UI framework 120 includes a UI control template. For example, the first terminal includes a mobile phone, a computer, a tablet, or a wearable device. As shown in FIG. 5, the method includes the following steps.

Step 102. Detect that the UI control template is dragged to the layout file editor by using a drag operation and the drag operation is released.

Optionally, the UI control template includes at least one of a slider bar control template, a selection control template, a button control template, a list control template, and an input control template.

For example, as shown in FIG. 3, a developer drags a "button" control template in a UI control template set to the layout file editor.

Step 104. After receiving an editing operation input by the developer to the control editor of the UI control template, set an attribute of a UI control, and generate the UI control based on the attribute of the UI control.

Optionally, the UI control includes at least one of a slider bar control, a selection control, a button control, a list control, and an input control.

Optionally, the control editor includes a trigger attribute editing unit, a presentation attribute editing unit, and a response attribute editing unit.

In this embodiment of this application, the attribute of the UI control includes a trigger attribute, a presentation attribute, and a response attribute. The trigger attribute includes a plurality of input events supported by the UI control. The presentation attribute includes a plurality of presentation manners supported by the UI control. The response attribute includes a plurality of response actions performed after the UI control is triggered.

Optionally, the input event includes at least one of a voice event, an image event, a touch event, a mouse event, a keyboard event, a sensor event, and a remote input device event.

Optionally, the image event includes at least one of a body, a sentiment, a lip language, or a sign language. Optionally, the sensor event includes an electromyographic signal.

Optionally, the presentation manner includes at least one of a word, a graphic, sound, a video, and lighting.

In this embodiment of this application, as shown in FIG. 6, step 104 specifically includes:
Step 1042. After receiving an editing operation input by the developer to the presentation attribute editing unit, set the presentation attribute of the UI control.

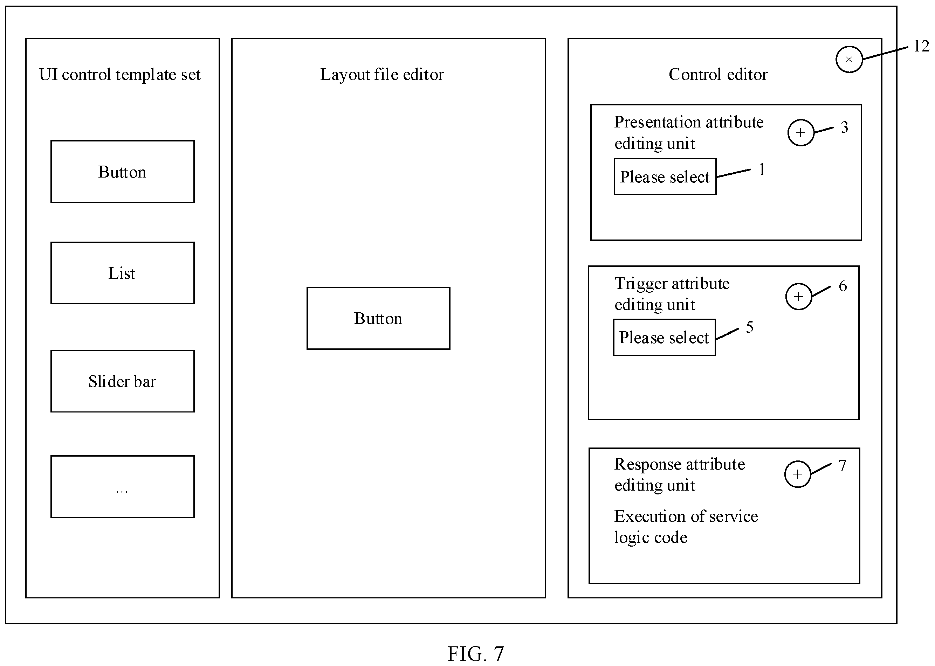

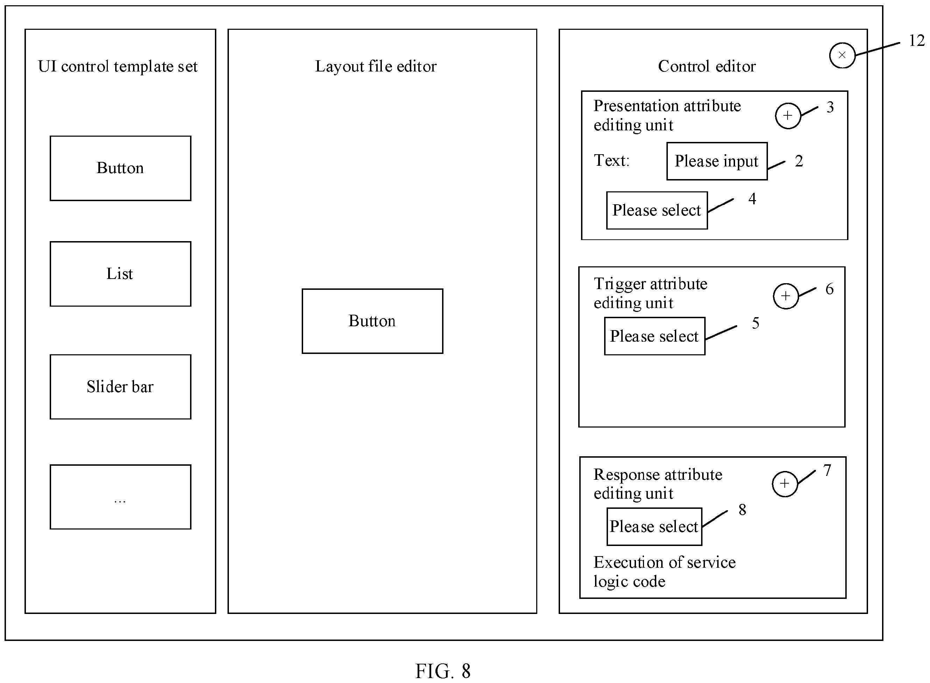

Specifically, the developer may double-click or right-click, with a mouse, a "button" control template in the layout file editor in FIG. 7, so that the control editor pops up in a development interface. As shown in FIG. 7, the control editor includes a presentation attribute editing unit, a trigger attribute editing unit, and a response attribute editing unit. After the developer selects a presentation manner of a "word" type in a drop-down control "please select" 1 in the presentation attribute editing unit, a location for displaying the drop-down control "please select" 1 is changed to display text "word", and an input control "please input" 2 appears on the right of the text "word". As shown in FIG. 8, the developer may input a word in the input control "please input" 2. For example, the developer inputs "login" in the input control "please input" 2, and a location for displaying the input control "please input" 2 is changed to display the text "login". Then, the developer may click an add button 3 on the right of a location for displaying text "presentation attribute editing unit" to add a presentation manner to a presentation attribute of the button control "login". In this case, another drop-down control "please select" 4 appears in the presentation attribute editing unit. After the developer selects a presentation manner of a "sound" type in the drop-down control "please select" 4, a location for displaying the drop-down control "please select" 4 is changed to display text" sound", and an input control "please input" appears on the right of the text "sound". The developer may input a word in the input control "please select". For example, the developer inputs "please log in" in the input control "please select", and a location for displaying the input control "please select" is changed to display the text "please log in". After receiving the foregoing editing operation input by the developer to the presentation attribute editing unit, the first terminal sets the presentation attribute of the button control "login", so that the presentation attribute that is of the button control "login" and that is set by the IDE of the first terminal based on the editing operation includes the presentation manner such as the word "login" and the sound "please log in".

Step 1044. After receiving an editing operation input by the developer to the trigger attribute editing unit, set the trigger attribute of the UI control.

Specifically, as shown in FIG. 7, after the developer selects an input event of a "voice" type in a drop-down control "please select" 5 in the trigger attribute editing unit, a location for displaying the drop-down control "please select" 5 is changed to display text "voice", and an input control "please input" appears on the right of the text "voice". The developer may input a word in the input control "please input". For example, the developer inputs "login" in the input control "please input", and a location for displaying the input control "please input" is changed to display the text "login". Then, the developer may click an add button 6 on the right of a location for displaying text "trigger attribute editing unit" to add an input event to a trigger attribute of the button control "login". In this case, another drop-down control "please select" appears in the presentation attribute editing unit. After the developer selects an input event of a "sound" type in the drop-down control "please select", a location for displaying the drop-down control "please select" is changed to display text "sound", and an input control "please input" appears on the right of the text "sound". The developer may input a word in the input control "please input". For example, the developer inputs "login" in the input control "please input", and a location for displaying the input control "please input" is changed to display the text "login". Then, the developer clicks the add button 6 on the right of the location for displaying the text "trigger attribute editing unit" to add an input event to the trigger attribute of the button control "login". In this case, another drop-down control "please select" appears in the presentation attribute editing unit. After the developer selects an input event of a "touchscreen action" type in the drop-down control "please select", a location for displaying the drop-down control "please select" is changed to display text "touchscreen action", and an input control "please input" appears on the right of the text "touchscreen action". The developer may input a word in the input control "please input". For example, the developer inputs "press" in the input control "please input", and a location for displaying the input control "please input" is changed to display the text "press". After receiving the foregoing editing operation input by the developer to the trigger attribute editing unit, the first terminal sets the trigger attribute of the button control "login", so that the trigger attribute that is of the button control "login" and that is set by the IDE of the first terminal based on the editing operation includes the input event such as the voice "login", the voice "login", and the touchscreen action "press". Step 1046. After receiving an editing operation input by the developer to the response attribute editing unit, set the response attribute of the UI control.

Specifically, as shown in FIG. 7, the response attribute editing unit considers by default that a response action of the UI control includes execution of service logic code. The developer may click a location for displaying "execution of service logic code", so that a code editing interface pops up in the development interface, and the developer writes the service logic code of the UI control in the code editing interface. In addition, the developer may click an add button on the right of the location for displaying text "response attribute editing unit" to add a response action to a response attribute of the button control "login". In this case, a drop-down control "please select" appears in the response attribute editing unit. After the developer selects a response action of a "sound" type in the drop-down control "please select", a location for displaying the drop-down control "please select" is changed to display text "sound", and an input control "please input" appears on the right of the text "sound". The developer may input a word in the input control "please input". For example, the developer input "ding" in the input control "please input", and a location for displaying the input control "please input" is changed to display text "ding". After receiving the foregoing editing operation input by the developer to the response attribute editing unit, the first terminal sets the response attribute of the button control "login", so that the response attribute that is of the button control "login" and that is set by the IDE of the first terminal based on the editing operation includes the response action such as the sound "ding" and execution of the service logic code.

Step 1048. Generate the UI control based on the presentation attribute, the trigger attribute, and the response attribute of the UI control.

Specifically, the IDE of the first terminal generates the UI control based on the presentation attribute, the trigger attribute, and the response attribute of the UI control. As shown in FIG. 3, the IDE generates the button control "login" based on the presentation attribute, the trigger attribute, and the response attribute that are edited by the developer in the control editor of the button control template. It should be noted that, after the developer edits the presentation attribute, the trigger attribute, and the response attribute of the UI control in the control editor, the IDE has automatically stored the presentation attribute, the trigger attribute, and the response attribute of the UI control. When the developer clicks a button "exit" 12 in the control editor, the IDE generates the UI control based on the stored presentation attribute, trigger attribute, and response attribute of the UI control.

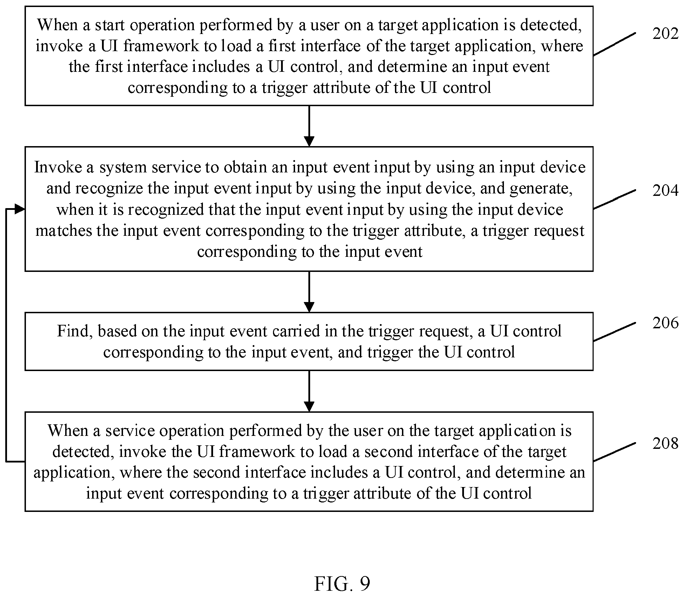

A sequence of performing step 1022, step 1024, and step 1046 is not limited in this embodiment of this application. In the technical solutions of the UI control generation method provided in this embodiment of this application, it is detected that the UI control template is dragged to the layout file editor by using the drag operation and the drag operation is released. After the editing operation input by the developer to the control editor of the UI control template is received, the attribute of the UI control is set, and the UI control is generated based on the attribute of the UI control. The attribute of the UI control includes the trigger attribute, the presentation attribute, and the response attribute. The trigger attribute includes the plurality of input events supported by the UI control. The presentation attribute includes the plurality of presentation manners supported by the UI control. The response attribute includes the plurality of response actions performed after the UI control is triggered. In this embodiment of this application, the developer can conveniently develop a GUI application that supports a plurality of input events and a plurality of presentation manners. Based on the UI framework 120 and the system service 130 in the system architecture 100 in FIG. 4A and FIG. 4B, an embodiment of this application provides a UI control trigger method. FIG. 9 is a flowchart of a UI control trigger method according to an embodiment of this application. The method is applied to a second terminal, and the second terminal includes a target application, a UI framework 120, and a system service 130. For example, the second terminal includes a mobile phone, a computer, a tablet, or a wearable device. As shown in FIG. 9, the method includes the following steps.

Step 202. When detecting a start operation performed by a user on the target application, invoke the UI framework to load a first interface of the target application, where the first interface includes a UI control, and determine an input event corresponding to a trigger attribute of the UI control.

In this embodiment of this application, the target application includes a GUI application.

In this embodiment of this application, the first interface generally includes a home page interface or a login interface of the target application.

Optionally, the UI control includes at least one of a slider bar control, a selection control, a button control, a list control, and an input control.

In this embodiment of this application, an attribute of the UI control includes a trigger attribute, a presentation attribute, and a response attribute. The trigger attribute includes a plurality of input events supported by the UI control. The presentation attribute includes a plurality of presentation manners supported by the UI control. The response attribute includes a plurality of response actions performed after the UI control is triggered.

Optionally, the input event includes at least one of a voice event, an image event, a touch event, a mouse event, a keyboard event, a sensor event, and a remote input device event.

Optionally, the image event includes at least one of a body, a sentiment, a lip language, or a sign language.

Optionally, the sensor event includes an electromyographic signal.

Optionally, the presentation manner includes at least one of a word, a graphic, sound, a video, and lighting.

In this embodiment of this application, the UI framework includes a UI control template set, a UI loader, an input event set, a multimode trigger attribute subscriber, a multimode behavior trigger, a presentation component set, and a response action set.

Specifically, when the second terminal detects the start operation performed by the user on the target application, the second terminal invokes the UI loader of the UI framework to load the first interface of the target application. The first interface includes the UI control. The second terminal invokes the multimode trigger attribute subscriber of the UI framework to determine the input event corresponding to the trigger attribute of the UI control, and sends, to the system service, the determined input event corresponding to the trigger attribute of the UI control.

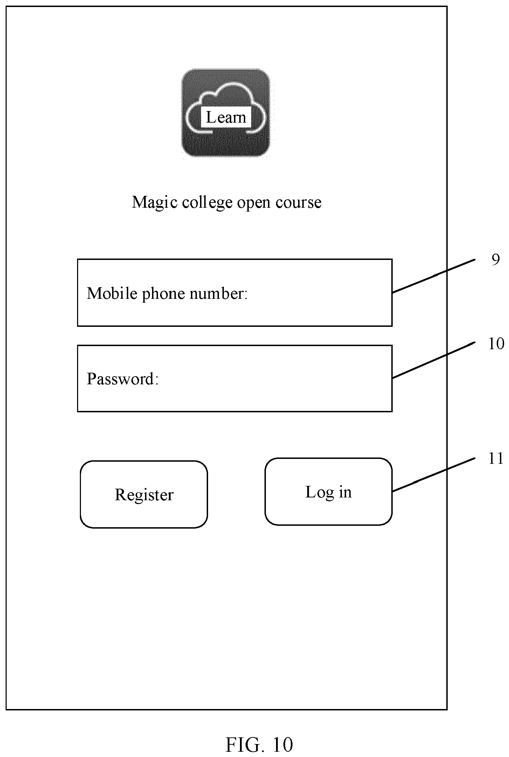

For example, the target application includes an app 1. When detecting that the app 1 is started, the second terminal invokes the UI loader of the UI frame to load a login interface of the app 1. As shown in FIG. 10, the login interface includes an input control "mobile number" 9, an input control "password" 10, and a button control "login" 11. An input event corresponding to a trigger attribute of the input control "mobile number" 9 includes inputting a mobile number by using a keyboard. An input event corresponding to a trigger attribute of the input control "password" 10 includes inputting a password by using a keyboard. An input event corresponding to a trigger attribute of the button control "login" 11 includes a voice "login", a voice "login", and a touchscreen action "press". The second terminal invokes the multimode trigger attribute subscriber of the UI framework to determine the input events corresponding to the trigger attributes of the input control "mobile number" 9, the input control "password" 10, and the button control "login" 11, and sends, to the system service, the determined input events corresponding to the trigger attributes of the input control "mobile number" 9, the input control "password" 10, and the button control "login" 11.

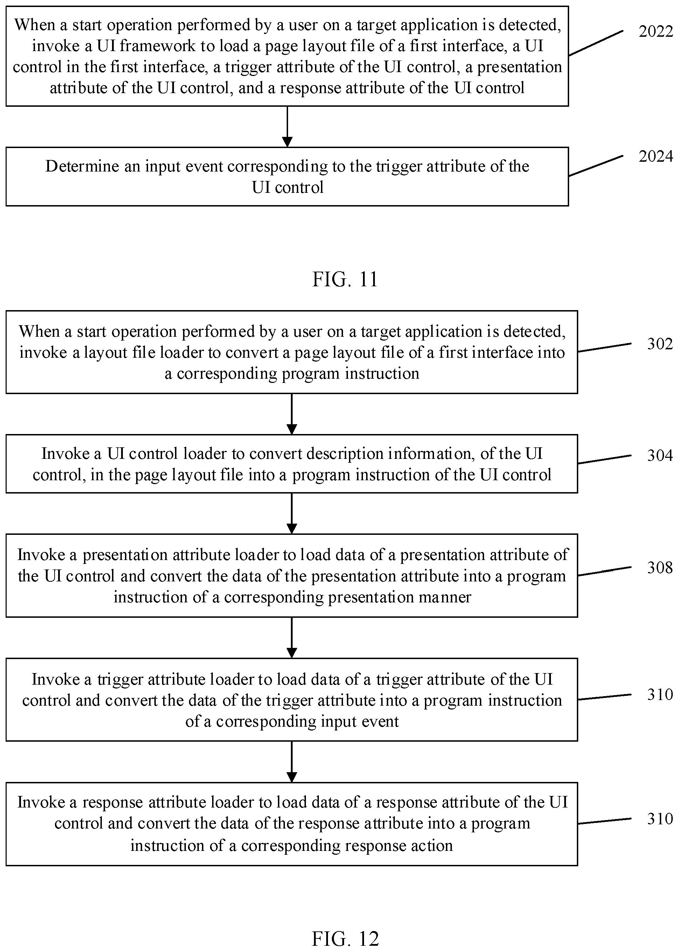

In this embodiment of this application, as shown in FIG. 11, step 202 specifically includes:
Step 2022. When detecting the start operation performed by the user on the target application, invoke the UI loader of the UI framework to load a page layout file of the first interface, the UI control in the first interface, the trigger attribute of the UI control, a presentation attribute of the UI control, and a response attribute of the UI control.

Optionally, the UI loader includes a layout file loader, a UI control loader, a trigger attribute loader, a presentation attribute loader, and a response attribute loader.

Specifically, FIG. 12 is a flowchart of loading a first interface by a second terminal. As shown in FIG. 12, when detecting the start operation performed by the user on the target application, the second terminal invokes the layout file loader to convert the page layout file of the first interface into a corresponding program instruction; invokes the UI control loader to convert description information, of the UI control, in the page layout file into a program instruction of the UI control; invokes the presentation attribute loader to load data of the presentation attribute of the UI control and convert the data of the presentation attribute into a program instruction of a corresponding presentation manner, for example, convert a word "login" of a presentation attribute of a button control "login" into invoking of a program instruction of the display text "login"; invokes the trigger attribute loader to load data of the trigger attribute of the UI control and convert the data of the trigger attribute into a program instruction of a corresponding input event, for example, the trigger attribute loader converts a voice "login" of the trigger attribute into a voice recognition object, where the voice recognition object is used to activate recognition of the voice "login" by the system service; and invokes the response attribute loader to load data of the response attribute of the UI control and convert the data of the response attribute into a program instruction of a corresponding response action.

Step 2024. Determine the input event corresponding to the trigger attribute of the UI control.

In this embodiment of this application, the second terminal invokes the multimode trigger attribute subscriber of the UI framework to determine input events corresponding to trigger attributes of all UI controls in the first interface and then send the determined input event to the system service, to activate recognition, by the system service, of an input event that matches the input event sent by the multimode trigger attribute subscriber.

For example, an input event corresponding to a trigger attribute of a button control "login" includes a voice "login", a voice "login", and a touchscreen action "press". The multimode trigger attribute subscriber recognizes, based on the button control "login", that the input event corresponding to the trigger attribute of the button control "login" includes the voice "login", the voice "login", and the touchscreen action "press", and sends, to the system service, the recognized input event such as the voice "login", the voice "login", and the touchscreen action "press".

In this embodiment of this application, after the second terminal determines the input event corresponding to the trigger attribute of the UI control, the second terminal further needs to invoke the system service to store the input event corresponding to the trigger attribute of the UI control.

Optionally, the system service includes recognition activation, recognition reporting, and event distribution. Specifically, the event distribution receives and stores the input event that corresponds to the trigger attribute and that is sent by the multimode trigger attribute subscriber, and then sends, to the recognition activation, the input event corresponding to the trigger attribute.

Step 204. Invoke the system service to obtain an input event input by using an input device and recognize the input event input by using the input device, and generate, when recognizing that the input event input by using the input device matches the input event corresponding to the trigger attribute, a trigger request corresponding to the input event. In this embodiment of this application, after the second terminal generates, when recognizing that the input event input by using the input device matches the input event corresponding to the trigger attribute, the trigger request corresponding to the input event, the second terminal further needs to verify the input event input by using the input device. When the verification succeeds, the second terminal finds, based on the input event carried in the trigger request, a UI control corresponding to the input event, and triggers the UI control. The verifying the input event input by using the input device includes: comparing the input event carried in the trigger request with the stored input event corresponding to the trigger attribute of the UI control. That the verification succeeds means that the input event carried in the trigger request and the stored input event corresponding to the trigger attribute of the UI control are a same input event.

Specifically, the recognition activation turns on, based on the input event that corresponds to the trigger attribute and that is sent by the event distribution, an input device corresponding to the input event. The recognition reporting receives and recognizes the input event input by using the input device. When recognizing that the input event input by using the input device is the same as the input event corresponding to the trigger attribute, the recognition reporting sends, to the event distribution, the trigger request corresponding to the input event. The event distribution verifies the input event carried in the trigger request. When the verification performed by the event distribution on the input event carried in the trigger request succeeds, the event distribution sends the trigger request to the multimode behavior trigger.

For example, the recognition activation turns on a microphone and a touchscreen based on the input event sent by the event distribution, for example, a voice "login", a voice "login", and a touchscreen action "press". The recognition reporting receives a voice event input by using the microphone and a touchscreen event input by using the touchscreen, recognizes whether the voice event includes "login" or "login", and recognizes whether the touchscreen event includes a "press" operation performed at a location for displaying a button control "login" on the touchscreen. If recognizing the voice "login", the recognition reporting sends, to the event distribution, a trigger request corresponding to the voice "login". The event distribution verifies the voice "login" carried in the trigger request. When the verification performed by the event distribution on the voice "login" carried in the trigger request succeeds, the event distribution sends the trigger request to the multimode behavior trigger.

For example, the second terminal is displaying the login interface of the app 1. After the user inputs the mobile number and the password in the input control "mobile number" and the input control "password", the microphone detects that the user says "login", and the microphone sends the voice "login" to the system service. The recognition reporting in the system service receives the voice "login", and recognizes that the input event such as the voice "login" is the same as the input event such as the voice "login" sent by the multimode trigger attribute subscriber. The recognition reporting generates a trigger request corresponding to the input event such as the voice "login", and sends the trigger request to the event distribution. The event distribution verifies the voice "login" carried in the trigger request. When the voice "login" carried in the trigger request and the input event that corresponds to the trigger attribute of the UI control and that is stored in the event distribution are a same input event, the verification performed by the event distribution on the voice "login" carried in the trigger request succeeds, and the event distribution sends the trigger request to the multimode behavior trigger.

Optionally, a recognition function of the system service includes voice recognition, body recognition, intent recognition, sentiment recognition, system environment monitoring, and conventional input recognition. For example, when it is detected, by using the system environment monitoring function, that noise in a current environment is high, it indicates that voice recognition accuracy of the system service is low. In this case, a voice recognition priority of the system service may be reduced. The conventional input recognition may include keyboard input recognition, mouse input recognition, touchscreen input recognition, and the like. Step 206. Find, based on the input event carried in the trigger request, a UI control corresponding to the input event, and trigger the UI control.

In this embodiment of this application, step 206 specifically includes: finding, based on the input event carried in the trigger request and a preset correspondence between an input event and a control identifier of a UI control, a control identifier corresponding to the input event; finding, based on the control identifier, a UI control corresponding to the control identifier; and triggering the UI control.

In this embodiment of this application, after receiving the trigger request corresponding to the input event, the multimode behavior trigger finds, based on the input event carried in the trigger request, the control identifier of the UI control that matches the input event, finds, based on the control identifier, the UI control that matches the control identifier, and triggers the UI control. It should be noted that the developer presets the control identifier of the UI control in the UI framework, and sets a correspondence between a control identifier of a UI control and an input event corresponding to a trigger attribute of a UI control. Therefore, the multimode behavior trigger of the UI framework can find, based on the input event, the UI control corresponding to the input event.

It should be noted that, when the input device includes a mouse or a touchscreen, the input event sent by the input device to the system service further includes location information, so that the multimode behavior trigger finds, based on the location information, the UI control corresponding to the input event. For example, after the touchscreen receives a press operation performed by the user at the location for displaying the button control "login" on the touchscreen, the touchscreen first obtains location information of the press operation, and then sends, to the system service, a touchscreen event corresponding to the press operation. The touchscreen event includes the location information of the press operation. When recognizing that the touchscreen event sent by the touchscreen matches the input event that corresponds to the trigger attribute and that is sent by the multimode trigger attribute subscriber, the recognition reporting in the system service sends a trigger request of the touchscreen event to the event distribution. The event distribution verifies the touchscreen event carried in the trigger request. When the verification performed by the event distribution on the touchscreen event succeeds, the event distribution sends the trigger request of the touchscreen event to the multimode behavior trigger. Because the touchscreen event carried in the trigger request includes the location information, the multimode behavior trigger finds, based on the location information, a control identifier that is of the button control "login" and that matches the location information, and then finds, based on the control identifier, the button control "login" that matches the control identifier, to trigger the button control "login". In this embodiment of this application, after triggering the UI control, the multimode behavior trigger notifies the response action set, and the response action set performs a corresponding response action based on the response attribute of the UI control. For example, a response attribute of the button control "login" includes a response action such as sound "ding" and execution of service logic code. After the button control "login" is triggered by the multimode behavior trigger, the response action set enables the second terminal to produce the sound "ding" and execute the service logic code.

Further, after step S206, the method further includes:
Step 208. When detecting a service operation performed by the user on the target application, invoke the UI framework to load a second interface of the target application, where the second interface includes a UI control, determine an input event corresponding to a trigger attribute of the UI control, and continue to perform step 204.

In this embodiment of this application, the service operation includes another operation, other than a start operation, that can switch an interface of the target application. For example, the service operation includes a login operation, a registration operation, or a return operation. It should be noted that the service operation does not include an exit operation. A reason is that the second terminal closes the target application when the second terminal detects an exit operation performed by the user on the target application.

In this embodiment of this application, the second interface and the first interface are different. It should be noted that the second interface depends on the service operation performed by the user on the target application. For example, if the user completes a service operation such as registration completion by clicking a button control "complete registration" in a registration interface, because service logic code of the button control "complete registration" includes that the registration interface is switched to a specified interface after the button control "complete registration" is triggered, for example, the specified interface includes a login interface, the second interface includes the login interface. If the user performs a service operation such as login by clicking a button control "login" in a login interface, because service logic code of the button control "login" includes that the login interface is switched to a specified interface after the button control "login" is triggered, for example, the specified interface includes a home page interface, the second interface includes the home page interface. If the user performs a password input operation in an input control "password" in a login interface by using a keyboard, because service logic code of the input control "password" does not include that the login interface is switched to a specified interface after the input control "password" is triggered, the interface of the target application is not switched after the user performs the password input operation.

For example, when detecting that the user performs a login operation in the login interface of the app 1, the second terminal displays a second interface, and the second interface includes a home page interface of the app 1.

Specifically, the second terminal invokes the UI loader of the UI framework to load the second interface of the target application. The second interface includes the UI control. The second terminal invokes the multimode trigger attribute subscriber of the UI framework to determine the input event corresponding to the trigger attribute of the UI control in the second interface, and continues to perform step 204.

In the technical solutions of the UI control trigger method provided in this embodiment of this application, when the start operation performed by the user on the target application is detected, the UI framework is invoked to load the first interface of the target application, where the first interface includes a UI control, and a plurality of input events corresponding to a trigger attribute of the UI control are determined. The system service is invoked to obtain an input event input by using the input device and recognize the input event input by using the input device, and when it is recognized that the input event input by using the input device matches an input event corresponding to the trigger attribute, a trigger request corresponding to the input event is generated. A UI control corresponding to the input event is found based on the trigger request, and the UI control is triggered. An attribute of the UI control includes a trigger attribute, a presentation attribute, and a response attribute. The trigger attribute includes a plurality of input events supported by the UI control. The presentation attribute includes a plurality of presentation manners supported by the UI control. The response attribute includes a plurality of response actions performed after the UI control is triggered. The UI control in this embodiment of this application supports a plurality of input events and a plurality of presentation manners.

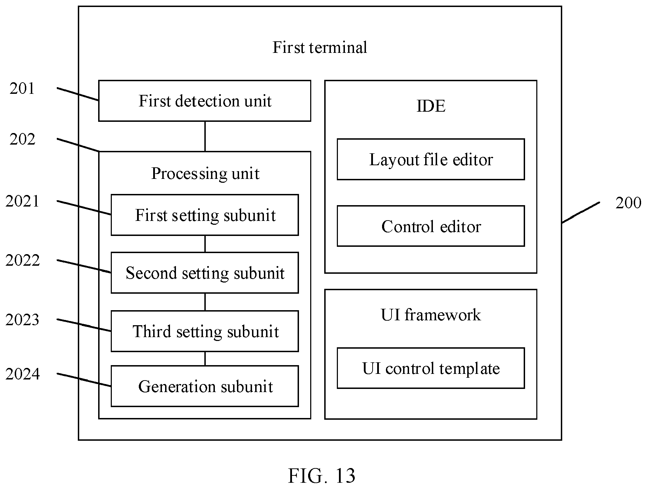

With reference to FIG. 5 to FIG. 12, the foregoing describes in detail the UI generation method and the UI trigger method that are provided in embodiments of this application. The following describes in detail apparatus embodiments of this application with reference to FIG. 13 to FIG. 15. It should be understood that an electronic device in embodiments of this application may perform various methods in embodiments of this application. In other words, for specific working processes of the following products, refer to a corresponding process in the foregoing method embodiments.

FIG. 13 is a schematic block diagram of a first terminal 200 according to an embodiment of this application. It should be understood that the first terminal 200 can perform steps in the UI control generation method in FIG. 5 and FIG. 6. To avoid repetition, details are not described herein again. For example, the first terminal includes a mobile phone, a computer, a tablet, or a wearable device. As shown in FIG. 13, the first terminal 200 includes a first detection unit 201 and a processing unit 202.

The first detection unit 201 is configured to detect that a UI control template is dragged to a layout file editor by using a drag operation and the drag operation is released. The processing unit 202 is configured to: after receiving an editing operation input by a developer to a control editor of the UI control template, set an attribute of a UI control, and generate the UI control based on the attribute of the UI control.

In this embodiment of this application, the first terminal 200 includes an IDE and a UI framework, the IDE includes the layout file editor and the control editor, and the UI framework includes the UI control template.

Optionally, the UI control template includes at least one of a slider bar control template, a selection control template, a button control template, a list control template, and an input control template.

Optionally, the UI control includes at least one of a slider bar control, a selection control, a button control, a list control, and an input control.

Optionally, the control editor includes a trigger attribute editing unit, a presentation attribute editing unit, and a response attribute editing unit.

In this embodiment of this application, the attribute of the UI control includes a trigger attribute, a presentation attribute, and a response attribute. The trigger attribute includes a plurality of input events supported by the UI control. The presentation attribute includes a plurality of presentation manners supported by the UI control. The response attribute includes a plurality of response actions performed after the UI control is triggered.

Optionally, the input event includes at least one of a voice event, an image event, a touch event, a mouse event, a keyboard event, a sensor event, and a remote input device event.

Optionally, the image event includes at least one of a body, a sentiment, a lip language, or a sign language. Optionally, the sensor event includes an electromyographic signal.

Optionally, the presentation manner includes at least one of a word, a graphic, sound, a video, and lighting.

In this embodiment of this application, the processing unit 202 specifically includes:
a first setting subunit 2021, configured to: after receiving an editing operation input by the developer to the presentation attribute editing unit, set the presentation attribute of the UI control;
a second setting subunit 2022, configured to: after receiving an editing operation input by the developer to the trigger attribute editing unit, set the trigger attribute of the UI control;
a third setting subunit 2023, configured to: after receiving an editing operation input by the developer to the response attribute editing unit, set the response attribute of the UI control; and
a generation subunit 2024, configured to generate the UI control based on the presentation attribute, the trigger attribute, and the response attribute of the UI control.

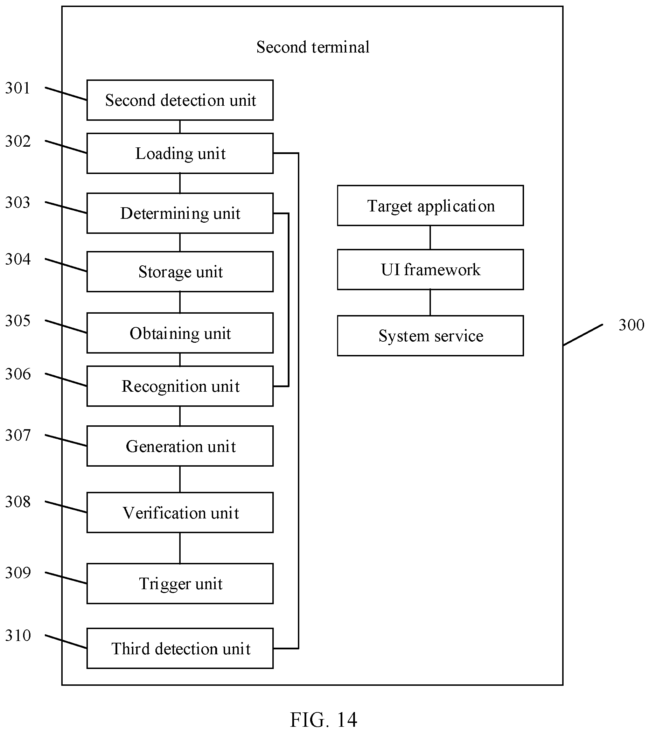

In the technical solutions of the first terminal provided in this embodiment of this application, it is detected that the UI control template is dragged to the layout file editor by using the drag operation and the drag operation is released. After the editing operation input by the developer to the control editor of the UI control template is received, the attribute of the UI control is set, and the UI control is generated based on the attribute of the UI control. The attribute of the UI control includes the trigger attribute, the presentation attribute, and the response attribute. The trigger attribute includes the plurality of input events supported by the UI control. The presentation attribute includes the plurality of presentation manners supported by the UI control. The response attribute includes the plurality of response actions performed after the UI control is triggered. In this embodiment of this application, the developer can conveniently develop a GUI application that supports a plurality of input events and a plurality of presentation manners. FIG. 14 is a schematic block diagram of a second terminal 300 according to an embodiment of this application. It should be understood that the second terminal 300 can perform steps in the UI control trigger method in FIG. 9 to FIG. 12. To avoid repetition, details are not described herein again. For example, the second terminal includes a mobile phone, a computer, a tablet, or a wearable device. As shown in FIG. 14, the second terminal 300 includes a second detection unit 301, a loading unit 302, a determining unit 303, an obtaining unit 305, a recognition unit 306, a generation unit 307, and a verification unit 308.

The second detection unit 301 is configured to detect a start operation performed by a user on a target application. The loading unit 302 is configured to invoke a UI framework to load a first interface of the target application, where the first interface includes a UI control. The determining unit 303 is configured to determine an input event corresponding to a trigger attribute of the UI control.

In this embodiment of this application, the second terminal 300 further includes a storage unit 304.

The storage unit 304 is configured to store the input event corresponding to the trigger attribute of the UI control. The obtaining unit 305 is configured to invoke a system service to obtain an input event input by using an input device. The recognition unit 306 is configured to recognize the input event input by using the input device.

The generation unit 307 is configured to: when it is recognized that the input event input by using the input device matches the input event corresponding to the trigger attribute, generate a trigger request corresponding to the input event.

In this embodiment of this application, the second terminal 300 further includes the verification unit 308.

The verification unit 308 is configured to verify the input event carried in the trigger request.

In this embodiment of this application, the second terminal 300 includes the target application, the UI framework, and the system service.

In this embodiment of this application, the target application includes a GUI application.

In this embodiment of this application, the first interface generally includes a home page interface or a login interface of the target application.

Optionally, the UI control includes at least one of a slider bar control, a selection control, a button control, a list control, and an input control.

In this embodiment of this application, an attribute of the UI control includes a trigger attribute, a presentation attribute, and a response attribute. The trigger attribute includes a plurality of input events supported by the UI control. The presentation attribute includes a plurality of presentation manners supported by the UI control. The response attribute includes a plurality of response actions performed after the UI control is triggered.

Optionally, the input event includes at least one of a voice event, an image event, a touch event, a mouse event, a keyboard event, a sensor event, and a remote input device event.

Optionally, the image event includes at least one of a body, a sentiment, a lip language, or a sign language. Optionally, the sensor event includes an electromyographic signal.

Optionally, the presentation manner includes at least one of a word, a graphic, sound, a video, and lighting.

In this embodiment of this application, the loading unit 302 is specifically configured to: when the start operation performed by the user on the target application is detected, invoke the UI framework to load a page layout file of the first interface, the UI control in the first interface, the trigger attribute of the UI control, a presentation attribute of the UI control, and a response attribute of the UI control.

Optionally, a recognition function of the system service includes a recognition function such as voice recognition, body recognition, intent recognition, sentiment recognition, system environment monitoring, and conventional input recognition. In this embodiment of this application, the second terminal 300 further includes a trigger unit 309.

The trigger unit 309 is configured to: after the verification performed by the verification unit 308 on the input event carried in the trigger request succeeds, find, based on the input event carried in the trigger request, a UI control corresponding to the input event, and trigger the UI control.

In this embodiment of this application, the second terminal 300 further includes a third detection unit 310.

The third detection unit 310 is configured to detect a service operation performed by the user on the target application. The loading unit 302 is further configured to invoke the UI framework to load a second interface of the target application, where the second interface includes a UI control. The determining unit 303 is further configured to determine an input event corresponding to a trigger attribute of the UI control in the second interface. The operation of storing the input event corresponding to the trigger attribute of the UI control, invoking a system service to obtain an input event input by using an input device, and recognizing the input event continues to be performed.

In this embodiment of this application, the service operation includes another operation other than a start operation.

For example, the service operation includes a login operation, a registration operation, or a return operation.

In this embodiment of this application, the second interface and the first interface are different.

In the technical solutions of the second terminal provided in this embodiment of this application, when the start operation performed by the user on the target application is detected, the UI framework is invoked to load the first interface of the target application, where the first interface includes at least one UI control, and a plurality of input events corresponding to a trigger attribute of the UI control are determined. The system service is invoked to obtain an input event input by using the input device and recognize the input event input by using the input device, and when it is recognized that the input event input by using the input device matches an input event corresponding to the trigger attribute, a trigger request corresponding to the input event is generated. A UI control corresponding to the input event is found based on the trigger request, and the UI control is triggered. An attribute of the UI control includes a trigger attribute, a presentation attribute, and a response attribute. The trigger attribute includes a plurality of input events supported by the UI control. The presentation attribute includes a plurality of presentation manners supported by the UI control. The response attribute includes a plurality of response actions performed after the UI control is triggered. The UI control in this embodiment of this application supports a plurality of input events and a plurality of presentation manners

It should be understood that the first terminal 200 and the second terminal 300 are implemented in a form of a functional unit. The term "unit" herein may be implemented in a form of software and/or hardware. This is not specifically limited. For example, the "unit" may be a software program, a hardware circuit, or a combination thereof that implements the foregoing functions. The hardware circuit may include an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. Therefore, units in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

An embodiment of this application provides an electronic device. The electronic device may be a terminal device or a circuit device built into the terminal device. The electronic device includes the first terminal or the second terminal, and may be used to perform a function/step in the foregoing method embodiments.

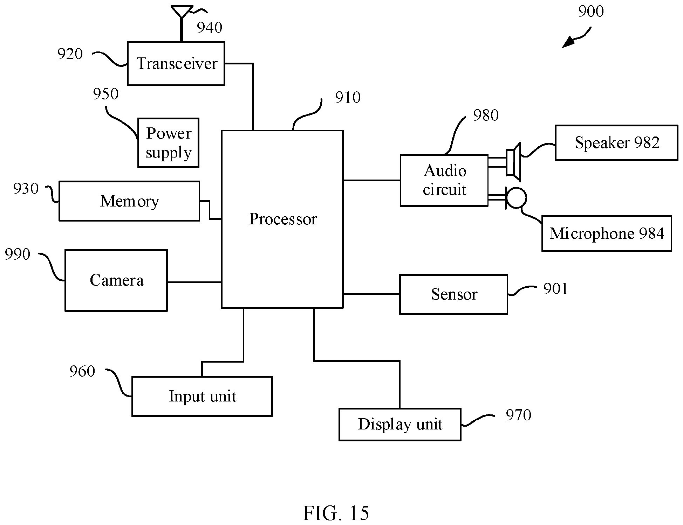

As shown in FIG. 15, an electronic device 900 includes a processor 910 and a transceiver 920. Optionally, the electronic device 900 may further include a memory 930. The processor 910, the transceiver 920, and the memory 930 may communicate with each other through an internal connection channel to transmit a control signal and/or a data signal. The memory 930 is configured to store a computer program. The processor 910 is configured to: invoke the computer program from the memory 930, and run the computer program.

Optionally, the electronic device 900 may further include an antenna 940, configured to send a radio signal output by the transceiver 920.

The processor 910 and the memory 930 may be combined into a processing apparatus, and more commonly, are components independent of each other. The processor 910 is configured to execute program code stored in the memory 930 to implement the foregoing functions. During specific implementation, the memory 930 may be integrated into the processor 910, or is independent of the processor 910.

In addition, the electronic device 900 may further include one or more of an input unit 960, a display unit 970, an audio circuit 980, a camera 990, a sensor 901, and the like, to further improve a function of the electronic device 900. The audio circuit may further include a loudspeaker 982, a microphone 984, and the like. The display unit 970 may include a display screen.

Optionally, the electronic device 900 may further include a power supply 950, configured to supply power to various components or circuits in the terminal device.

It should be understood that the electronic device 900 shown in FIG. 15 can implement processes in the method embodiments shown in FIG. 5 to FIG. 12. Operations and/or functions of the modules in the electronic device 900 are respectively used to implement corresponding processes in the foregoing method embodiments. For details, refer to the descriptions in the foregoing method embodiments. To avoid repetition, detailed descriptions are appropriately omitted herein.

It should be understood that the processor 910 in the electronic device 900 shown in FIG. 15 may be a system on a chip (system on a chip, SOC). The processor 910 may include a central processing unit (central processing unit, CPU), and may further include another type of processor. The CPU may be referred to as a primary CPU. Parts of processors cooperate with each other to implement the foregoing method process, and each part of processor may selectively execute some software drivers.

In conclusion, the parts of processors or processing units inside the processor 910 may cooperate with each other to implement the foregoing method process, and a corresponding software program of each part of processor or processing unit may be stored in the memory 930.

An embodiment of this application provides a computer-readable storage medium. The computer-readable storage medium stores instructions. When the instructions are run on a terminal device, the terminal device is enabled to perform steps in the UI control generation method shown in FIG. 5 and FIG. 6 and/or the UI control trigger method shown in FIG. 9 to FIG. 12.

An embodiment of this application further provides a computer program product that includes instructions. When the computer program product runs on a computer or at least one processor, the computer is enabled to perform steps in the UI control generation method shown in FIG. 5 and FIG. 6 and/or the UI control trigger method shown in FIG. 9 to FIG. 12.

An embodiment of this application further provides a chip, including a processor. The processor is configured to read and run a computer program stored in a memory, to perform a corresponding operation and/or a corresponding process that are/is performed in the UI control generation method and/or the UI control trigger method that are/is provided in this application.

Optionally, the chip further includes a memory, the memory is connected to the processor by using a circuit or a wire, and the processor is configured to read and execute a computer program in the memory. Further, optionally, the chip further includes a communication interface, and the processor is connected to the communication interface. The communication interface is configured to receive data and/or information that needs to be processed, and the processor obtains the data and/or information from the communication interface, and processes the data and/or the information. The communication interface may be an input/output interface.

In the foregoing embodiments, the processor 910 may include, for example, a central processing unit (central processing unit, CPU), a microprocessor, a microcontroller, or a digital signal processor, and may further include a GPU, an NPU, and an ISP. The processor may further include a necessary hardware accelerator or logic processing hardware circuit, for example, an application-specific integrated circuit (application-specific integrated circuit, ASIC) or one or more integrated circuits configured to control program execution of the technical solutions in this application. In addition, the processor may have functions for operating one or more software programs, and the software programs may be stored in the memory.

The memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer.

In embodiments of this application, "at least one" means one or more, and " a plurality of" means two or more. The term "and/or" describes an association relationship for describing associated objects and represents that three relationships may exist. For example, A and/or B may represent the following three cases: Only A exists, both A and B exist, and only B exists. A and B may be in a singular or plural form. The character "/" generally indicates an "or" relationship between associated objects. At least one of the following items (pieces) or a similar expression thereof indicates any combination of these items, including a single item (piece) or any combination of a plurality of items (pieces). For example, at least one of a, b, and c may represent a, b, c, a and b, a and c, b and c, or a, b, and c, where a, b, and c may be in a single or plural form.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. Any variation or replacement readily figured out by a person skilled in the art within the technical scope disclosed in this application shall fall within the protection scope in embodiments of this application. Therefore, the protection scope of this application shall be subject to the protection scope of the claims.

## Claims

1. A UI control generation method, applied to a first terminal, wherein the first terminal comprises an IDE and a UI framework, the IDE comprises a layout file editor and a control editor, the UI framework comprises a UI control template, and the method comprises:
detecting that the UI control template is dragged to the layout file editor by using a drag operation and the drag operation is released; and
setting an attribute of a UI control and generating the UI control based on the attribute of the UI control after receiving an editing operation input by a developer to the control editor of the UI control template, wherein the attribute of the UI control comprises a trigger attribute, a presentation attribute, and a response attribute, the trigger attribute comprises a plurality of input events supported by the UI control, the presentation attribute comprises a plurality of presentation manners supported by the UI control, and the response attribute comprises a plurality of response actions performed after the UI control is triggered.

2. The method according to claim 1, wherein the control editor comprises a trigger attribute editing unit, a presentation attribute editing unit, and a response attribute editing unit; and
the setting an attribute of a UI control and generating the UI control based on the attribute of the UI control after receiving an editing operation input by a developer to the control editor of the UI control template comprises:
after receiving an editing operation input by the developer to the presentation attribute editing unit, setting the presentation attribute of the UI control;
after receiving an editing operation input by the developer to the trigger attribute editing unit, setting the trigger attribute of the UI control;
after receiving an editing operation input by the developer to the response attribute editing unit, setting the response attribute of the UI control; and
generating the UI control based on the presentation attribute, the trigger attribute, and the response attribute of the UI control.

3. The method according to claim 1, wherein the UI control comprises at least one of a slider bar control, a selection control, a button control, a list control, and an input control.

4. The method according to claim 1, wherein the input event comprises at least one of a voice event, an image event, a touch event, a mouse event, a keyboard event, a sensor event, and a remote input device event.

5. The method according to claim 1, wherein the presentation manner comprises at least one of a word, a graphic, sound, a video, and lighting.

6. A UI control trigger method, applied to a second terminal, wherein the second terminal comprises a target application, a UI framework, and a system service, and the method comprises:
invoking, when detecting a start operation performed by a user on the target application, the UI framework to load a first interface of the target application, wherein the first interface comprises a UI control, and determining an input event corresponding to a trigger attribute of the UI control;
invoking the system service to obtain an input event input by using an input device and recognize the input event input by using the input device, and generating, when recognizing that the input event input by using the input device matches the input event corresponding to the trigger attribute, a trigger request corresponding to the input event; and
finding, based on the input event carried in the trigger request, a UI control corresponding to the input event, and triggering the UI control, wherein
an attribute of the UI control comprises a trigger attribute, a presentation attribute, and a response attribute, the trigger attribute comprises a plurality of input events supported by the UI control, the presentation attribute comprises a plurality of presentation manners supported by the UI control, and the response attribute comprises a plurality of response actions performed after the UI control is triggered.

7. The method according to claim 6, wherein after the determining an input event corresponding to a trigger attribute of the UI control, and before the invoking the system service to obtain an input event input by using an input device and recognize the input event input by using the input device, the method further comprises:
storing the input event corresponding to the trigger attribute of the UI control; and
after the generating, when recognizing that the input event input by using the input device matches the input event corresponding to the trigger attribute, a trigger request corresponding to the input event, the method further comprises:
verifying the input event carried in the trigger request; when the verification succeeds, finding, based on the input event carried in the trigger request, the UI control corresponding to the input event; and triggering the UI control.

8. The method according to claim 7, wherein the verifying the input event carried in the trigger request comprises:
comparing the input event carried in the trigger request with the stored input event corresponding to the trigger attribute of the UI control, wherein
that the verification succeeds means that the input event carried in the trigger request and the stored input event corresponding to the trigger attribute of the UI control are a same input event.

9. The method according to claim 6, wherein the finding, based on the input event carried in the trigger request, a UI control corresponding to the input event, and triggering the UI control specifically comprises:
finding, based on the input event carried in the trigger request and a preset correspondence between an input event and a control identifier of a UI control, a control identifier corresponding to the input event; finding, based on the control identifier, a UI control corresponding to the control identifier; and triggering the UI control.

10. The method according to claim 6, wherein the invoking, when detecting a start operation performed by a user on the target application, the UI framework to load a first interface of the target application, wherein the first interface comprises a UI control, and determining an input event corresponding to a trigger attribute of the UI control specifically comprises:
when detecting the start operation performed by the user on the target application, invoking the UI framework to load a page layout file of the first interface, the UI control, the trigger attribute of the UI control, a presentation attribute of the UI control, and a response attribute of the UI control; and
determining the input event corresponding to the trigger attribute of the UI control.

11. The method according to claim 6, wherein after the finding, based on the trigger request, a UI control corresponding to the input event, and triggering the UI control, the method further comprises:
when detecting a service operation performed by the user on the target application, invoking the UI framework to load a second interface of the target application, wherein the second interface comprises a UI control; determining an input event corresponding to a trigger attribute of the UI control; and continuing to perform the step of invoking the system service to obtain an input event input by using an input device and recognize the input event input by using the input device.

12. The method according to claim 6, wherein the UI control comprises at least one of a slider bar control, a selection control, a button control, a list control, and an input control.

13. The method according to claim 6, wherein the input event comprises at least one of a voice event, an image event, a touch event, a mouse event, a keyboard event, a sensor event, and a remote input device event.

14. The method according to claim 6, wherein the presentation manner comprises at least one of a word, a graphic, sound, a video, and lighting.

15. The method according to claim 6, wherein a recognition function of the system service comprises a recognition function such as voice recognition, body recognition, intent recognition, sentiment recognition, system environment monitoring, and conventional input recognition.

16. A first terminal, comprising a display, a processor, and a memory, wherein the first terminal further comprises an IDE and a UI framework, the IDE comprises a layout file editor and a control editor, the UI framework comprises a UI control template, the memory is configured to store a computer program, the computer program comprises program instructions, and when the processor runs the program instructions, the first terminal is enabled to perform the following steps:
detecting that the UI control template is dragged to the layout file editor by using a drag operation and the drag operation is released; and
setting an attribute of a UI control and generating the UI control based on the attribute of the UI control after receiving an editing operation input by a developer to the control editor of the UI control template, wherein
the attribute of the UI control comprises a trigger attribute, a presentation attribute, and a response attribute, the trigger attribute comprises a plurality of input events supported by the UI control, the presentation attribute comprises a plurality of presentation manners supported by the UI control, and the response attribute comprises a plurality of response actions performed after the UI control is triggered.

17. The first terminal according to claim 16, wherein the control editor comprises a trigger attribute editing unit, a presentation attribute editing unit, and a response attribute editing unit; and when the processor runs the program instructions, the first terminal is enabled to perform the following steps:
the setting an attribute of a UI control and generating the UI control based on the attribute of the UI control after receiving an editing operation input by a developer to the control editor of the UI control template comprises:
after receiving an editing operation input by the developer to the presentation attribute editing unit, setting the presentation attribute of the UI control;
after receiving an editing operation input by the developer to the trigger attribute editing unit, setting the trigger attribute of the UI control;
after receiving an editing operation input by the developer to the response attribute editing unit, setting the response attribute of the UI control; and
generating the UI control based on the presentation attribute, the trigger attribute, and the response attribute of the UI control.

18. The first terminal according to claim 16, wherein the UI control comprises at least one of a slider bar control, a selection control, a button control, a list control, and an input control.

19. The first terminal according to claim 16, wherein the input event comprises at least one of a voice event, an image event, a touch event, a mouse event, a keyboard event, a sensor event, and a remote input device event.

20. The first terminal according to claim 14, wherein the presentation manner comprises at least one of a word, a graphic, sound, a video, and lighting.

21. A second terminal, comprising a display, a processor, and a memory, wherein the second terminal further comprises a target application, a UI framework, and a system service, the memory is configured to store a computer program, the computer program comprises program instructions, and when the processor runs the program instructions, the second terminal is enabled to perform the following steps:
invoking, when detecting a start operation performed by a user on the target application, the UI framework to load a first interface of the target application, wherein the first interface comprises a UI control, and determining an input event corresponding to a trigger attribute of the UI control;
invoking the system service to obtain an input event input by using an input device and recognize the input event input by using the input device, and generating, when recognizing that the input event input by using the input device matches the input event corresponding to the trigger attribute, a trigger request corresponding to the input event; and
finding, based on the input event carried in the trigger request, a UI control corresponding to the input event, and triggering the UI control, wherein
an attribute of the UI control comprises a trigger attribute, a presentation attribute, and a response attribute, the trigger attribute comprises a plurality of input events supported by the UI control, the presentation attribute comprises a plurality of presentation manners supported by the UI control, and the response attribute comprises a plurality of response actions performed after the UI control is triggered.

22. The second terminal according to claim 21, wherein when the processor runs the program instructions, the second terminal is enabled to perform the following steps:
after the determining an input event corresponding to a trigger attribute of the UI control, and before the invoking the system service to obtain an input event input by using an input device and recognize the input event input by using the input device, the method further comprises:
storing the input event corresponding to the trigger attribute of the UI control; and
after the generating, when recognizing that the input event input by using the input device matches the input event corresponding to the trigger attribute, a trigger request corresponding to the input event, the method further comprises:
verifying the input event carried in the trigger request; when the verification succeeds, finding, based on the input event carried in the trigger request, the UI control corresponding to the input event; and triggering the UI control.

23. The second terminal according to claim 22, wherein when the processor runs the program instructions, the second terminal is enabled to perform the following steps:
the verifying the input event carried in the trigger request comprises:
comparing the input event carried in the trigger request with the stored input event corresponding to the trigger attribute of the UI control, wherein
that the verification succeeds means that the input event carried in the trigger request and the stored input event corresponding to the trigger attribute of the UI control are a same input event.

24. The second terminal according to claim 21, wherein when the processor runs the program instructions, the second terminal is enabled to perform the following steps:
the finding, based on the input event carried in the trigger request, a UI control corresponding to the input event, and triggering the UI control specifically comprises:
finding, based on the input event carried in the trigger request and a preset correspondence between an input event and a control identifier of a UI control, a control identifier corresponding to the input event; finding, based on the control identifier, a UI control corresponding to the control identifier; and triggering the UI control.

25. The second terminal according to claim 21, wherein when the processor runs the program instructions, the second terminal is enabled to perform the following steps:
the invoking, when detecting a start operation performed by a user on the target application, the UI framework to load a first interface of the target application, wherein the first interface comprises a UI control, and determining an input event corresponding to a trigger attribute of the UI control specifically comprises:
when detecting the start operation performed by the user on the target application, invoking the UI framework to load a page layout file of the first interface, the UI control, the trigger attribute of the UI control, a presentation attribute of the UI control, and a response attribute of the UI control; and
determining the input event corresponding to the trigger attribute of the UI control.

26. The second terminal according to claim 21, wherein when the processor runs the program instructions, the second terminal is enabled to perform the following steps:
after the finding, based on the trigger request, a UI control corresponding to the input event, and triggering the UI control,
when detecting a service operation performed by the user on the target application, invoking the UI framework to load a second interface of the target application, wherein the second interface comprises a UI control; determining an input event corresponding to a trigger attribute of the UI control; and continuing to perform the step of invoking the system service to obtain an input event input by using an input device and recognize the input event input by using the input device.

27. The second terminal according to claim 21, wherein the UI control comprises at least one of a slider bar control, a selection control, a button control, a list control, and an input control.

28. The second terminal according to claim 21, wherein the input event comprises at least one of a voice event, an image event, a touch event, a mouse event, a keyboard event, a sensor event, and a remote input device event.

29. The second terminal according to claim 21, wherein the presentation manner comprises at least one of a word, a graphic, sound, a video, and lighting.

30. The second terminal according to claim 21, wherein a recognition function of the system service comprises a recognition function such as voice recognition, body recognition, intent recognition, sentiment recognition, system environment monitoring, and conventional input recognition.
